# EUROPÄISCHE PATENTSCHRIFT

(11) **EP 1 979 602 B1**
(45) Veröffentlichungstag und Bekanntmachung des Hinweises auf die Patenterteilung: **15.03.2017**
(21) Anmeldenummer: 07702947.8
(22) Anmeldetag: 23.01.2007
(51) Int. Cl.: F28D 7/16, F28F 9/02, F02M 26/29, B23P 15/26, F28F 7/00, F28D 9/00, F02M 26/32, F28F 13/12, F28D 21/00, F28F 9/00, F02M 26/11

(54) **WÄRMETAUSCHER**
HEAT EXCHANGER
ÉCHANGEUR DE CHALEUR

(30) Priorität: 23.01.2006 DE 102006003303
(43) Veröffentlichungstag der Anmeldung: 15.10.2008
(73) Patentinhaber: MAHLE Behr GmbH & Co. KG, 70469 Stuttgart (DE)
(72) Erfinder: NEHER, Stefan, 73084 Salach (DE); PFEFFER, Johannes, 70374 Stuttgart (DE); STECK, Alexander, 72127 Kusterdingen-Wankheim (DE); WEISER, Helmut, 72076 Tübingen (DE)
(74) Vertreter: Grauel, Andreas
(86) Internationale Anmeldenummer: PCT/EP2007/000536
(87) Internationale Veröffentlichungsnummer: WO 2007/082774

(56) Entgegenhaltungen:
- WO-A-02/18758
- WO-A-92/09859
- WO-A-94/02180
- WO-A-03/036214
- DE-A1- 3 734 523
- DE-A1- 10 224 263
- DE-U1- 20 100 968
- FR-A- 1 001 826
- US-A- 4 635 712

## Beschreibung

Die vorliegende Erfindung betrifft einen Wärmetauscher, insbesondere zur Abgaskühlung nach dem Oberbegriff des Patentanspruches 1.

Bei der Verbrennung von Kraftstoff in Verbrennungsmotoren entsteht Abgas. Ein Teil des Abgases wird in Wärmetauschern, insbesondere in Abgaswärmetauschern, gekühlt und anschließend der Ladeluft des Verbrennungsmotors beigemischt und dem Verbrennungsmotor zugeführt.

Bekannt sind verschiedene Konstruktionen von geschweißten oder gelöteten Wärmetauschern, insbesondere Abgaswärmetauschern, als Rohrbündel- oder Stapelscheibensysteme. Bekannte Wärmetauscher weisen insbesondere dünnwandige Gehäuse auf. Diese benötigen zusätzliche Halteelemente zur Befestigung am Motor oder am Fahrzeug. Neben zusätzlichen Kosten ist dies mit erhöhtem Platzbedarf verbunden. Beim Durchströmen der Wärmetauscher, insbesondere der Abgaswärmetauscher, erfahren die Rohre des Wärmetauschers eine thermische Längsdehnung und eine thermische Querdehnung. Aus diesem Grund ist das Gehäuse zumeist flexibel gestaltet. Bedingt durch diese Flexibilität des Gehäuses sind die Kühlmittelstutzen, die den Zu- und Abfluss eines Kühlmediums gewährleisten, flexibel an den Motorblock eines Verbrennungsmotors bzw. die motorseitige Wasserversorgung angeschlossen.

Aus der DE 102 18 521 A1 ist ein Abgaswärmeübertrager, insbesondere für Kraftfahrzeuge mit Abgasrückführung (AGR), bekannt, der aus einem Gehäusemantel für ein Kühlmittel und aus einem von Abgas durchströmten, vom Kühlmittel umströmten Rohrbündel, besteht, welches über Rohrböden im Gehäuse aufgenommen wird, wobei Rohrbündel, Rohrböden und Gehäuse einen in sich geschlossenen Kraftfluss bilden, wobei im Kraftfluss ein Schiebesitz angeordnet ist. Die Enden der Rohre sind in einem Rohrboden befestigt, der seinerseits mit dem Gehäusemantel verschweißt ist. Der Gehäusemantel weist einen Schiebesitz auf. Ein Außenring überlappt einen Innenring und bildet mit diesem einen Gleitsitz. Der Gleitsitz ist durch zwei O-Ringe nach außen, d.h. zur Atmosphäre hin abgedichtet, damit kein Kühlmittel nach außen entweichen kann.

Aus der DE 102 04 107 A1 ist ein Wärmeübertrager, insbesondere Abgaswärmeübertrager für Kraftfahrzeuge, bekannt, mit einem von einem gasförmigen Medium durchströmten und von einem flüssigen Kühlmittel umströmten Rohrbündel, dessen Rohre mit ihren Rohrenden in Rohrböden aufgenommen und stoffschlüssig mit diesen Verbunden sind, mit einem das Rohrbündel umgebendem Gehäusemantel, der endseitig stoffschlüssig mit den Rohrböden verbunden ist und vom Kühlmittel durchströmt wird, wobei Rohrböden und Gehäusemantel aus einer warm- und korrosionsfesten metallischen Legierung hergestellt sind, wobei der Gehäusemantel mindestens eine umlaufende Dehnsicke aufweist. Diese Sicke verleiht dem Gehäusemantel eine hinreichende Elastizität in Längsrichtung der Rohre, so dass der Gehäusemantel durch elastische Dehnung der stärkeren Dehnung der Abgasrohre folgen kann, ohne dass es dabei zu einer unzulässigen Verformung oder eine Beeinträchtigung der Schweißnahtverbindung zwischen Rohren und Boden und Boden und Gehäuse kommt.

Ferner ist aus der als nächst liegender Stand der Technik angesehene DE 102 24 263 A1 ein Abgaswärmeübertrager, insbesondere für Kraftfahrzeuge mit Abgasrückführung, bestehend aus einem Gehäuse mit Gehäusemantel für ein Kühlmittel und aus einem von Abgas durchströmten, vom Kühlmittel umströmten Rohrbündel welches über einen ersten und einen zweiten Rohrboden im Gehäuse aufgenommen ist, wobei der erste Rohrboden fest mit dem Gehäuse verbunden ist und somit ein Festlager für das Rohrbündel bildet und der zweite Rohrboden als elastischer Kunststoffboden ausgebildet ist. Der Kunststoffboden ist aufgrund seines Elastizitätsmoduls in der Lage, gewisse Dehnungen, wie sie beim Betrieb des Abgaswärmeübertragers im Rohrbündel auftreten, durch elastische Verformung mitzumachen. Dies führt zu einer elastischen Auswölbung bzw. Verformung des Kunststoffbodens, wodurch unzulässige Spannungen in den Bauteilen vermieden werden.

Es ist Aufgabe der vorliegenden Erfindung, einen Wärmetauscher der eingangs genannten Art zu verbessern.

Die Aufgabe wird durch die Merkmale des Anspruchs 1 gelöst.

Es wird ein Wärmetauscher zur Abgaskühlung vorgeschlagen mit mindestens einem Gehäuse, mit einem ersten Strömungskanal für ein erstes Medium, mit mindestens einem zweiten Strömungskanal für ein zweites Medium, mit mindestens einem Boden, der mit dem Gehäuse verbindbar ist, wobei der Boden mindestens ein Dehnungselement zur Aufnahme von Längsdehnungen aufweist. Der erste Strömungskanal, insbesondere die ersten Strömungskanäle, können durch mindestens ein Rohr, insbesondere durch eine Anzahl von Rohren, gebildet sein.

Das erste Medium kann insbesondere ein gasförmiges Medium wie beispielsweise Abgas eines Verbrennungsmotors sein. Der zweite Strömungskanal kann insbesondere zwischen dem Gehäuse und Rohrwänden von Rohren ausgebildet sein.
Das zweite Medium kann insbesondere ein Fluid wie beispielsweise eine wasserhaltige Flüssigkeit oder ein gasförmiges Fluid wie beispielsweise Luft sein.
Der Wärmetauscher weist insbesondere einen Boden auf, der mit dem Gehäuse verbindbar ist. Der Boden kann insbesondere mit dem Gehäuse stoffschlüssig und/oder formschlüssig verbunden sein.
Erfindungsgemäß kann der Boden aus einem Metall, insbesondere aus Edelstahl oder Aluminium, ausgebildet sein.

Der Boden ist insbesondere derart ausgebildet, dass er ein Dehnungselement aufweist. Insbesondere kann das Dehnungselement eine axiale und/oder radiale Relativbewegung zwischen Boden und Gehäuse gewährleisten. Das Dehnungselement kann ferner eine axiale und/oder radiale Relativbewegung zwischen mindestens einem ersten Bodenabschnitt und mindestens einem zweiten Bodenabschnitt gewährleisten. Das Dehnungselement kann insbesondere eine thermische Ausdehnung des ersten Strömungskanals, insbesondere mindestens eines Rohres oder mindestens einer Scheibe gewährleisten. Erfindungsgemäß kann das Dehnungselement aus einem Metall, insbesondere aus Edelstahl, Aluminium, usw., ausgebildet sein. Bevorzugt kann das Metall ein elastisches Metall sein.

In einer vorteilhaften Ausgestaltung ist das Dehnungselement aus Metall ausgebildet. Besonders vorteilhaft kann das Dehnungselement mit dem Boden stoffschlüssig durch Löten, Schweißen, usw. verbindbar sein. In einer anderen Ausführung kann das Dehnungselement dadurch besonders einfach einteilig mit dem Boden ausgebildet sein.

In einer vorteilhaften Weiterbildung ist das Dehnungselement zumindest eine Ausprägung, die insbesondere umlaufend in den Boden einbringbar ist. Auf diese Weise kann zumindest ein erster Abschnitt des Bodens bezüglich zumindest eines zweiten Bodenabschnitts relativ bewegbar, insbesondere dehnbar, sein.

In einer vorteilhaften Ausbildung ist das Dehnungselement axial in einer Wärmetauscherlängsrichtung dehnbar. Das Dehnungselement ist besonders vorteilhaft in die Wärmetauscherlängsrichtung dehnbar.
Die Wärmetauscherlängsrichtung ist insbesondere die Richtung, in der der zumindest eine Strömungskanal, insbesondere das zumindest eine Rohr, verläuft.
Die Wärmetauscherlängsrichtung kann dabei insbesondere die Richtung sein, in der der zumindest eine erste Strömungskanal, insbesondere das zumindest eine Rohr, eine thermische Längsausdehnung erfährt.

In einer vorteilhaften Ausführung ist das Dehnungselement radial zu einer Wärmetauscherlängsrichtung dehnbar. Besonders vorteilhaft ist das Dehnungselement in Richtung einer thermischen Querdehnung zumindest eines Strömungskanals, insbesondere eines ersten Strömungskanals wie beispielsweise zumindest eines Rohres, dehnbar.

In einer Weiterbildung ist das Dehnungselement zumindest ein Wulst. Besonders vorteilhaft ist ein Wulst durch ein umformendes Fertigungsverfahren wie beispielsweise Stanzen, Prägen, Rollen, Bördeln usw. herstellbar.

In einer vorteilhaften Weiterbildung weist das Dehnungselement mindestens ein Rahmenelement auf. Besonders vorteilhaft ist das Rahmenelement ein Rahmen, der insbesondere eine Öffnung hat und insbesondere umlaufend ist.

In einer weiteren Ausgestaltung sind zumindest zwei Rahmenelemente im Wesentlichen parallel und insbesondere konzentrisch, zueinander anordenbar. Die zwei, insbesondere mehreren, Rahmenelemente sind besonders vorteilhaft derart angeordnet, dass sie parallel zueinander verlaufen. Insbesondere sind die Rahmen besonders vorteilhaft konzentrisch zueinander angeordnet. Die Öffnung des Rahmens kann dabei kreisförmig, oval, rechteckig oder mit abgerundeten Ecken ausgebildet sein. Besonders vorteilhaft können die Öffnungen der im Wesentlichen parallel zueinander angeordneten Rahmen derart ausgebildet sein, dass sie einen Zylinder oder einen Quader bilden können.

In einer vorteilhaften Weiterbildung sind die Rahmenelemente zumindest abschnittsweise stoffschlüssig, insbesondere durch Schweißen, Löten, Kleben usw., verbindbar. Besonders vorteilhaft sind, insbesondere zueinander benachbarte Flächen der Rahmenelemente, stoffschlüssig, insbesondere durch Schweißen, Löten, Kleben usw-, miteinander verbunden.

In einer Ausgestaltung sind die Rahmenelemente zumindest abschnittsweise formschlüssig, insbesondere durch Schrauben, Bördeln, Falzen, Verkrimpen usw., verbindbar. Die Rahmenelemente sind dabei besonders vorteilhaft im Wesentlichen parallel zueinander angeordnet.

In einer vorteilhaften Weiterbildung ist das Dehnungselement mäanderförmig ausgebildet. Besonders vorteilhaft können sich die mäanderförmig ausgebildeten Abschnitte derart dehnen bzw. strecken, dass sie bei Belastung im Wesentlichen eine geradlinige Form annehmen.

In einer Fortbildung ist das Dehnungselement ein Faltenbalg. Ein Faltenbalg kann sich bei Belastung besonders vorteilhaft in Längs- und/oder Querrichtung verformen.

Eine vorteilhafte Ausgestaltung ist dadurch gekennzeichnet, dass ein Dehnungselement mit mindestens einem Diffusor verbindbar ist. Besonders vorteilhaft kann das Dehnungselement mit mindestens einem Diffusor verbunden sein.

In einer vorteilhaften Weiterbildung ist das Gehäuse ein Gussgehäuse. Ein Gussgehäuse kann besonders vorteilhaft durch ein urformendes Fertigungsverfahren, wie beispielsweise Gießen, insbesondere Druckgießen oder Kokillengießen oder Gießen mit verlorenen Formen, hergestellt werden.

In einer besonders vorteilhaften Ausgestaltung sind mindestens ein Anschlussstutzen und/oder mindestens ein Befestigungselement einteilig mit dem Gehäuse ausgebildet. Der mindestens eine Anschlussstutzen und/oder das mindestens eine Befestigungselement, insbesondere zur Befestigung des Wärmetauschers beispielsweise an einem Verbrennungsmotor, kann mit dem Gehäuse besonders vorteilhaft durch ein urformendes Fertigungsverfahren wie beispielsweise Gießen, insbesondere Gießen mit verlorenen Formen oder Druckgießen, hergestellt werden.

In einer Fortbildung ist der Boden mit dem Gehäuse stoffschlüssig, insbesondere durch Schweißen, Kleben usw., und/oder formschlüssig, insbesondere durch Schrauben, Bördeln, Falzen, Verkrimpen usw., verbindbar.

In einer vorteilhaften Weiterbildung weist das Gehäuse mindestens zwei Gehäuseelemente auf, die miteinander stoffschlüssig, insbesondere durch Schweißen, Löten, Kleben usw., und/oder formschlüssig, insbesondere durch Schrauben, Bördeln, Falzen, Verkrimpen usw., verbindbar sind. Besonders vorteilhaft kann das Gehäuse beispielsweise aus zwei oder einer Anzahl von Gehäuseelementen aus Blech ausgebildet sein, die insbesondere stoffschlüssig und/oder formschlüssig miteinander verbunden sein können.

In einer Ausgestaltung ist der Wärmetauscher im I-Flow durchströmbar. Besonders vorteilhaft tritt insbesondere ein erstes Medium durch eine erste Öffnung in den Wärmetauscher ein, durchströmt diesen und tritt durch eine andere Öffnung aus dem Wärmetauscher aus.

In einer Weiterbildung ist der Wärmetauscher im U-Flow durchströmbar. Insbesondere tritt ein erstes Medium durch eine Öffnung in den Wärmetauscher ein, durchströmt diesen, erfährt insbesondere eine Richtungsumkehr und verlässt den Wärmetauscher, insbesondere durch eine weitere Öffnung, auf einer Eintrittsseite des ersten Mediums in den Wärmetauscher. Der Wärmetauscher weist in besonders vorteilhafter Weise insbesondere nur einen Boden auf.

In einer Weiterbildung ist der Wärmetauscher einflutig oder mehrflutig durchströmbar.

Erfindungsgemäß wird ferner ein Wärmetauscher zur Abgaskühlung vorgeschlagen mit mindestens einem Gehäuse, mit mindestens einem ersten Strömungskanal für ein erstes Medium, mit mindestens einem zweiten Strömungskanal für ein zweites Medium, mit mindestens einem Boden, mit mindestens einem Diffusor, mit mindestens einem Dehnungselement, wobei das mindestens eine Dehnungselement beabstandend, zumindest abschnittsweise beabstandend zwischen dem Boden und dem Gehäuse, und beabstandend, zumindest abschnittsweise beabstandend, zwischen dem Boden und dem Diffusor anordenbar ist. Insbesondere kann der erste Strömungskanal für ein erstes Medium wie beispielsweise Abgas, als Rohr bzw. als eine Anzahl von Rohren ausgebildet sein. Insbesondere kann der zweite Strömungskanal von einem zweiten Medium wie beispielsweise einem Kühlmedium, insbesondere einer wasserhaltigen Kühlflüssigkeit oder Luft, durchströmt werden. Der zweite Strömungskanal kann insbesondere zwischen dem Gehäuse und Rohrwänden zumindest eines Rohres oder zumindest einer Scheibe ausgebildet sein. Das mindestens eine Dehnungselement ist insbesondere zwischen dem Boden und dem Gehäuse angeordnet und kann den Boden und das Gehäuse zumindest abschnittsweise berühren. Ferner ist das mindestens eine Dehnungselement oder, insbesondere ein anderes Dehnungselement, zwischen dem Boden und dem Diffusor angeordnet. Das Dehnungselement kann den Boden und den Diffusor zumindest abschnittsweise berühren.

In einer weiteren vorteilhaften Ausgestaltung ist ein erstes Dehnungselement beabstandend, zumindest abschnittsweise beabstandend, zwischen dem Boden und dem Gehäuse und ein zweites Dehnungselement beabstandend, zumindest abschnittsweise beabstandend, zwischen dem Boden und dem Diffusor anordenbar. Das erste Dehnungselement kann besonders vorteilhaft den Boden und das Gehäuse zumindest abschnittsweise berühren. Das zweite Dehnungselement kann besonders vorteilhaft den Boden und den Diffusor zumindest abschnittsweise berühren.

In einer vorteilhaften Weiterbildung ist das zumindest eine Dehnungselement ein Dichtelement. Auf diese Weise kann besonders vorteilhaft der Austritt zumindest eines Mediums aus dem Gehäuseinneren des Wärmetauschers nach Außen verhindert werden.

In einer vorteilhaften Ausbildung ist das erste Medium Abgas und/oder das zweite Medium ein Kühlmedium, insbesondere ein wasserhaltiges Kühlfluid oder Luft.

In einer weiteren vorteilhaften Ausführung ist der erste Strömungskanal, insbesondere sind die ersten Strömungskanäle, Rohre, insbesondere Flachrohre, und der zweite Strömungskanal ist zwischen den Rohren und dem Gehäuse ausgebildet. Flachrohre können insbesondere Rohre sein, die im Wesentlichen einen langlochförmigen oder einen rechteckigen Querschnitt aufweisen, zwei Seiten der Rechteckfläche bzw. der Langlochfläche im Wesentlichen länger ausgebildet sind als die beiden anderen Rechteckflächen bzw. die beiden anderen Langlochflächen.

In einer vorteilhaften Weiterbildung ist der zweite Strömungskanal, insbesondere sind die zweiten Strömungskanäle, Rohre, insbesondere Flachrohre, und der erste Strömungskanal ist zwischen den Rohren und dem Gehäuse ausgebildet. Besonders vorteilhaft kann der erste Strömungskanal zwischen Außenflächen der Rohre und der Gehäuseinnenwand ausgebildet sein.

In einer vorteilhaften Weiterbildung weisen die Rohre turbulenzerzeugende Elemente auf. Besonders vorteilhaft können die turbulenzerzeugenden Elemente Ausprägungen wie Winglets oder Noppen sein. In einer anderen vorteilhaften Ausgestaltung können die turbulenzerzeugenden Elemente beispielsweise ausgestanzte und/oder umgeformte Bleche sein, die insbesondere in die Rohre eingelegt werden können.

In einer vorteilhaften Ausbildung sind die turbulenzerzeugenden Elemente Ausprägungen, die in das Rohr einbringbar sind. Besonders vorteilhaft können die Ausprägungen durch ein umformendes Fertigungsverfahren in das Rohr eingebracht werden.

In einer vorteilhaften Ausgestaltung berühren die Rohre das Gehäuse zumindest abschnittsweise. Die Rohre können sich besonders vorteilhaft am Gehäuse abstützen.

In einer vorteilhaften Weiterbildung berühren die Ausprägungen das Gehäuse zumindest abschnittsweise. Insbesondere können sich die Ausprägungen besonders vorteilhaft am Gehäuse abstützen.

In einer weiteren Ausgestaltung berühren die Ausprägungen zumindest eines Rohres zumindest ein dem Rohr benachbartes Rohr, zumindest abschnittsweise. Besonders vorteilhaft berühren sich die Rohre durch die Ausprägungen und stützen sich gegeneinander ab.

In einer Weiterbildung weist mindestens eine erste Scheibe eine erste Scheibenoberseite und eine erste Scheibenunterseite auf. Besonders vorteilhaft kann die erste Scheibenoberseite eine Fläche auf der Scheibe und die erste Scheibenunterseite eine weitere Fläche auf der Scheibe sein. Besonders vorteilhaft können sich die erste Scheibenoberseite und die erste Scheibenunterseite auf einander gegenüberliegenden Seiten der Scheibe befinden.

In einer vorteilhaften Ausgestaltung weist mindestens eine zweite Scheibe eine zweite Scheibenoberseite und eine zweite Scheibenunterseite auf. Besonders vorteilhaft kann die zweite Scheibenoberseite eine Fläche auf der Oberseite der Scheibe und die zweite Scheibenunterseite eine Fläche auf der unteren Seite der Scheibe sein. Die zweite Scheibenoberseite und die zweite Scheibenunterseite können besonders vorteilhaft auf einander gegenüberliegenden Seiten der zweiten Scheibe angeordnet sein.

In einer weiteren Ausgestaltung ist jeweils eine erste Scheibe benachbart zu jeweils einer zweiten Scheibe angeordnet, wobei die ersten und die zweiten Scheiben einen Scheibenstapel bilden.

In einer Weiterbildung ist der erste Strömungskanal zwischen mindestens einer ersten Scheibenoberseite und mindestens einer zweiten Scheibenunterseite ausgebildet und/oder der zweite Strömungskanal ist zwischen mindestens einer ersten Scheibenunterseite und mindestens einer zweiten Scheibenoberseite ausgebildet.

In einer vorteilhaften Weiterbildung ist der zweite Strömungskanal zwischen mindestens einer ersten Scheibenoberseite und mindestens einer zweiten Scheibenunterseite ausgebildet und/oder der erste Strömungskanal ist zwischen mindestens einer ersten Scheibenunterseite und mindestens einer zweiten Scheibenoberseite ausgebildet.

In einer vorteilhaften Ausgestaltung ist der erste Strömungskanal zwischen mindestens einer Scheibe und dem Gehäuse ausgebildet. Besonders vorteilhaft kann der erste Strömungskanal zwischen mehreren Scheiben und der Innenwand des Gehäuses ausgebildet sein.

In einer weiteren Ausbildung ist der zweite Strömungskanal zwischen mindestens einer Scheibe und dem Gehäuse ausgebildet. Besonders vorteilhaft kann der zweite Strömungskanal zwischen einer Anzahl von Scheiben und einer Innenwand des Gehäuses ausgebildet sein.

Erfindungsgemäß wird ferner ein Verfahren zur Herstellung eines Wärmetauschers, vorgeschlagen, wobei das Gehäuse mit einem urformenden Fertigungsverfahren hergestellt wird. Besonders vorteilhaft kann das urformende Fertigungsverfahren Gießen wie beispielsweise Gießen mit einer verlorenen Form oder Druckgießen sein.

In einer vorteilhaften Weiterbildung ist das Verfahren zur Herstellung eines Wärmetauschers dadurch gekennzeichnet, dass das Gehäuse durch Gießen, insbesondere Gießen mit einer verlorenen Form wie beispielsweise Sandgießen, hergestellt wird.

Vorteilhaft ist, dass das Dehnungselement (axial in einer Wärmetauscherlängsrichtung (WLR) dehnbar ist.

Vorteilhaft ist, dass das Dehnungselement radial zu einer Wärmetauscherlängsrichtung (WLR) dehnbar ist.

Vorteilhaft ist, dass das Dehnungselement zumindest ein Wulst ist.

Vorteilhaft ist, dass das Dehnungselement mindestens ein Rahmenelement aufweist.

Vorteilhaft ist, dass zumindest zwei Rahmenelemente im Wesentlichen parallel und, insbesondere konzentrisch, zueinander anordenbar sind.

Vorteilhaft ist, dass die Rahmenelemente zumindest abschnittsweise stoffschlüssig, insbesondere durch Schweißen, Löten, Kleben usw., verbindbar sind.

Vorteilhaft ist, dass die Rahmenelemente zumindest abschnittsweise formschlüssig, insbesondere durch Schrauben, Bördeln, Falzen, Verkrimpen usw., verbindbar sind.

Vorteilhaft ist, dass die Rahmenelemente einteilig ausgebildet sind.

Vorteilhaft ist, dass das Dehnungselement mit mindestens einem Diffusor verbindbar ist.

Vorteilhaft ist, dass das Gehäuse mindestens zwei Gehäuseelemente aufweist, die miteinander stoffschlüssig, insbesondere durch Schweißen, Löten, Kleben usw., und/oder formschlüssig, insbesondere durch Schrauben, Bördeln, Falzen, Verkrimpen usw., verbindbar sind.

Vorteilhaft ist, dass der Wärmetauscher in I-Flow durchströmbar ist.

Vorteilhaft ist, dass der Wärmetauscher im U-Flow durchströmbar ist.

Vorteilhaft ist, dass ein erstes Dehnungselement zumindest abschnittsweise beabstandend zwischen dem Boden und dem Gehäuse und ein zweites Dehnungselement zumindest abschnittsweise beabstandend zwischen dem Boden und dem Diffusor anordenbar ist.

Vorteilhaft ist, dass das erste Medium Abgas und/oder das zweite Medium ein Kühlmedium, insbesondere ein wasserhaltiges Kühlfluid oder Luft, ist.

Vorteilhaft ist, dass der erste Strömungskanal, insbesondere erste Strömungskanäle, Rohre, insbesondere Flachrohre, sind und der erste Strömungskanal zwischen den Rohren und dem Gehäuse ausgebildet ist.

Vorteilhaft ist, dass die Rohre turbulenzerzeugende Elemente aufweisen.

Vorteilhaft ist, dass die turbulenzerzeugenden Elemente Ausprägungen sind, die in das Rohr einbringbar sind.

Vorteilhaft ist, dass die Ausprägungen zumindest eines Rohres zumindest ein dem Rohr benachbartes Rohr zumindest abschnittsweise berühren.

Vorteilhaft ist, dass mindestens eine erste Scheibe eine erste Scheibenoberseite und eine erste Scheibenunterseite aufweist.

Vorteilhaft ist, dass mindestens eine zweite Scheibe eine zweite Scheibenoberseite und eine zweite Scheibenunterseite aufweist.

Vorteilhaft ist, dass jeweils eine erste Scheibe benachbart zu jeweils einer zweiten Scheibe anordenbar ist und die ersten Scheiben und die zweiten Scheiben einen Scheibenstapel bilden.

Vorteilhaft ist, dass der erste Strömungskanal zwischen mindestens einer ersten Scheibenoberseite und mindestens einer zweiten Scheibenunterseite ausgebildet ist und/oder der zweite Strömungskanal zwischen mindestens einer ersten Scheibenunterseite und mindestens einer zweiten Scheibenoberseite ausgebildet ist.

Vorteilhaft ist, dass der zweite Strömungskanal zwischen mindestens einer ersten Scheibenoberseite und mindestens einer zweiten Scheibenunterseite ausgebildet ist und/oder der erste Strömungskanal zwischen mindestens einer ersten Scheibenunterseite und mindestens einer zweiten Scheibenoberseite ausgebildet ist.

Vorteilhaft ist, dass der erste Strömungskanal zwischen mindestens einer Scheibe und dem Gehäuse ausgebildet ist.

Vorteilhaft ist, dass der zweite Strömungskanal zwischen mindestens einer Scheibe und dem Gehäuse ausgebildet ist.

Weitere vorteilhafte Ausgestaltungen der Erfindung ergeben sich aus den Unteransprüchen und aus der Zeichnung.

Ausführungsbeispiele der Erfindung sind in der Zeichnung dargestellt und werden im Folgenden näher erläutert. Es zeigen
Figur 1: einen Boden mit einem Dehnungselement in Form einer S-förmigen Doppelsicke,
Figur 2: eine Schnittdarstellung eines Bodens mit einem Dehnungselement in Form einer S-förmigen Doppelsicke,
Figur 3: eine Schnittdarstellung eines Dehnungselements in Form einer S-förmigen Doppelsicke in Verbindung mit einem Gehäusewandabschnitt,
Figur 4: eine Schnittdarstellung einer weiteren Ausführungsform eines Dehnungselements in Form eines Faltenbalgs, der mit der Bodenaußenseite verbunden ist,
Figur 5a: eine Schnittdarstellung einer weiteren Ausführung eines Dehnungselements in Form eines Faltenbalgs, der mit der Bodeninnenseite verbunden ist,
Figur 5b: eine Schnittdarstellung einer weiteren Ausführung eines Dehnungselements in Form eines Faltenbalgs mit einem nach innen zeigenden Gehäuseflansch,
Figur 6a: eine Schnittdarstellung einer weiteren Ausführung eines Dehnungselements in Form eines in den Boden eingebrachten Wulstes,
Figur 6b: eine Schnittdarstellung einer weiteren Ausführung eines Dehnungselements in Form eines in den Boden eingebrachten Wulstes, wobei der Gehäuseflansch nach innen zeigt,
Figur 7: eine Schnittdarstellung eines Gehäuseabschnitts in Verbindung mit einem Diffusorabschnitt, mit einem ersten Dehnungselement, das zwischen dem Gehäuseabschnitt und einem Bodenabschnitt angeordnet ist, sowie mit einem zweiten Dehnungselement, das zwischen einem Diffusorabschnitt und einem Bodenabschnitt angeordnet ist,
Figur 8: Explosionsdarstellung eines Wärmetauschers mit jeweils einem Boden, mit jeweils einem Dehnungselement und mit jeweils einem Diffusor,
Figur 9: Schnittdarstellung eines Flachrohrbündels mit turbulenzerzeugenden Elementen,
Figur 10: einen Scheibenstapel mit turbulenzerzeugenden Elementen zwischen den Scheiben,
Figur 11: eine weitere Ausführung eines Scheibenstapels mit turbulenzerzeugenden Elementen zwischen den Scheiben,
Figur 12: eine weitere Ausführung als vergrößerte Detaildarstellung eines Bodens mit einem Dehnungselement;

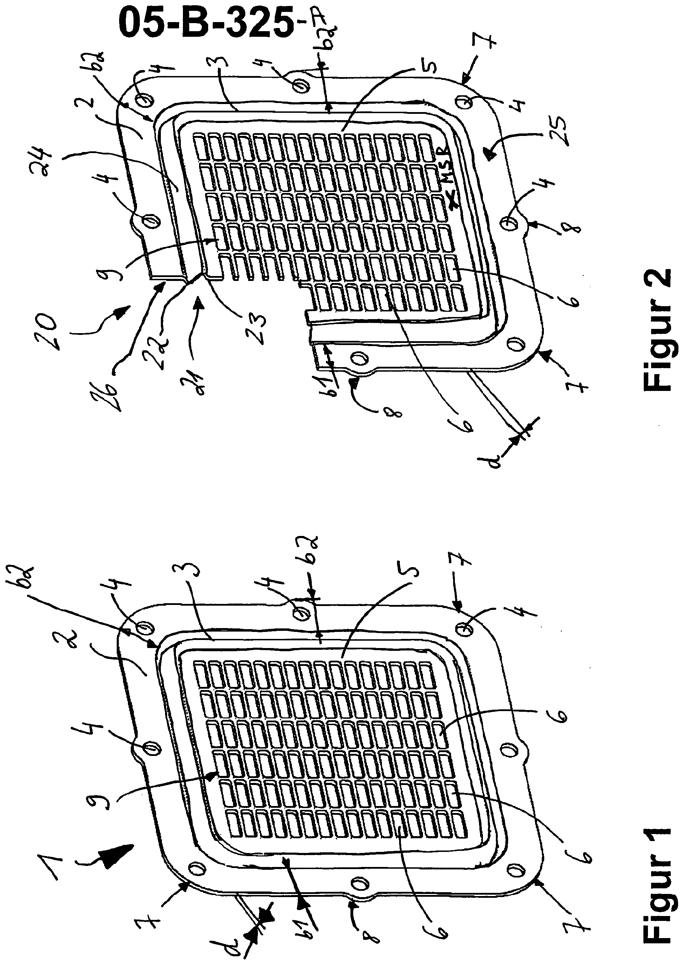

**Figur 1** zeigt einen Boden mit einem Dehnungselement in Form einer S-förmigen Doppelsicke.
Der Boden 1 weist einen Bodenrahmen 2 und eine Bodenfläche 5 auf. Ferner weist der Boden eine Bodendicke d auf. Der Boden 1 ist im Wesentlichen aus einem Material ausgebildet, das eine geringe Dichte aufweist. Insbesondere ist der Boden 1 aus einem Metall wie beispielsweise aus Edelstahl ausgebildet. In einer anderen Ausführung kann der Boden aus Kunststoff oder aus Aluminium ausgebildet sein.
Die Bodendicke d nimmt im Wesentlichen Werte 0,5 mm < d < 7,0 mm, insbesondere Werte zwischen 0,5mm < d < 4mm, insbesondere Werte zwischen 0,5mm und 3,0mm, insbesondere Werte zwischen 0,5mm < d < 2,5mm, insbesondere Werte zwischen 1mm < d < 2,5mm, insbesondere Werte zwischen 1,5mm < d < 2,0mm, insbesondere Werte zwischen 1,6mm < d < 1,9mm, insbesondere Werte zwischen 1,65mm < d < 1,85mm.
Der Bodenrahmen 2 weist mindestens eine Bodenbefestigungsöffnung 4 auf. Im dargestellten Ausführungsbeispiel weist der Bodenrahmen 2 acht Befestigungsöffnungen 4 auf. In einem anderen nicht dargestellten Ausführungsbeispiel weist der Bodenrahmen 2 mehr als acht Bodenbefestigungsöffnungen oder zwischen einer und acht Bodenbefestigungsöffnungen auf.

Der Rahmen 2 ist im Wesentlichen rechteckig, insbesondere quadratisch ausgebildet Der Rahmen 2 weist im dargestellten Ausführungsbeispiel vier Rahmenecken 7 auf. In einem anderen nicht dargestellten Ausführungsbeispiel weist der Rahmen mehr als vier Rahmenecken 7 oder zwischen einer und vier Rahmenecken 7 auf.
Die Rahmenecken 7 sind im dargestellten Ausführungsbeispiel abgerundet und weisen einen nicht näher bezeichneten Rahmeneckenradius auf. In einem anderen Ausführungsbeispiel können die Rahmenecken 7-eckig ausgebildet sein.

Die Bodenbefestigungsöffnungen 4 sind im Wesentlichen im Abschnitt des Rahmens 2 angeordnet, in dem die Rahmenecken 7 angeordnet sind. Ferner sind im Wesentlichen zwischen den Bodenbefestigungsöffnungen 4, die im Abschnitt der Rahmenecken 7 angeordnet sind, zumindest eine weitere Bodenbefestigungsöffnung 4 im Rahmen 2 angeordnet. In diesem Abschnitt weist der Rahmen 2 einen Kreisabschnitt 8 auf.
Der Kreisabschnitt dient im Wesentlichen zur Vergrößerung einer nicht bezeichneten Berührfläche des Bodenrahmens 2 mit einem nicht dargestellten Befestigungselement, insbesondere einer Schraube bzw. einer Mutter.
Der Rahmen weist im Abschnitt, in dem die Befestigungsöffnungen 4 angeordnet sind, eine zweite Rahmenbreite b2 auf. In den anderen Abschnitten weist der Bodenrahmen 2 eine erste Rahmenbreite b1 auf. Die erste Rahmenbreite b1 ist im Wesentlichen kleiner als die zweite Rahmenbreite b2. Auf diese Weise kann Material besonders vorteilhaft eingespart werden.

Der Bodenrahmen 2 ist mit der Bodenplatte 5 im dargestellten Ausführungsbeispiel einteilig ausgebildet. Die Bodenplatte weist im Wesentlichen die Bodendicke d auf. In einem anderen nicht dargestellten Ausführungsbeispiel ist der Bodenrahmen 2 nicht einteilig mit der Bodenplatte 5 ausgebildet. Der Bodenrahmen 2 ist dann zumindest abschnittsweise mit der Bodenplatte 5 verbunden.
Der Bodenrahmen 2 kann beispielsweise stoffschlüssig, insbesondere durch Schweißen, Löten, Kleben usw. und/oder formschlüssig, insbesondere durch Falzen, Bördeln, Verkrimpen usw., mit der Bodenplatte 5 verbunden sein.

Die Bodenplatte 5 weist eine Anzahl von Bodenflächenöffnungen 6 auf. Die Bodenflächenöffnungen 6 sind im Wesentlichen als Langloch ausgebildet.

Die Bodenflächenöffnungen 6 sind im Wesentlichen parallel zueinander angeordnet. Im dargestellten Ausführungsbeispiel sind die Bodenflächenöffnungen in sechs Reihen angeordnet. Die sechs Reihen weisen jeweils 16 Bodenflächenöffnungen 6 auf. Die sechs Reihen sind im Wesentlichen parallel zueinander angeordnet.
In einem anderen nicht dargestellten Ausführungsbeispiel können die Bodenflächenöffnungen 6 in ein bis sechs Reihen oder in mehr als sechs Reihen angeordnet sein.
Eine Reihe kann zwischen einer Bodenflächenöffnung 6 und sechzehn Bodenflächenöffnungen 6 oder mehr als sechzehn Bodenflächenöffnungen 6 aufweisen.
Die Bodenflächenöffnungen 6 sind im Wesentlichen rasterförmig angeordnet. Das nicht näher bezeichnete Raster an Bodenflächenöffnungen 6 ist im Wesentlichen konzentrisch zum Boden 1 bzw. zur Bodenplatte 5 angeordnet.
Die Bodenplatte 5 weist zumindest eine Doppelsicke 3 auf. Die Doppelsicke 3 ist im Wesentlichen zwischen dem Bodenrahmen 2 und einem nicht näher bezeichneten Gitter, welches insbesondere durch das Raster von Bodenflächenöffnungen 6 gebildet wird, angeordnet. Die Doppelsicke 3 besteht aus einer ersten Einzelsicke und einer zweiten Einzelsicke.

Die erste nicht näher bezeichnete Einzelsicke ist eine im Wesentlichen talförmige Einprägung in die Bodenplatte 5.
Die zweite nicht näher bezeichnete Einzelsicke ist eine im Wesentlichen wulstförmige Einprägung in die Bodenplatte 5. Die erste nicht näher bezeichnete Einzelsicke ist im Wesentlichen konzentrisch zum Rahmen 2 ausgebildet. Die erste Einzelsicke ist im Wesentlichen umlaufend um das Bodenflächenöffnungsgitter 9 angeordnet.
Die zweite nicht näher beizeichnete Einzelsicke ist im Wesentlichen konzentrisch zum Bodenrahmen 2 angeordnet. Die zweite Einzelsicke ist im Wesentlichen konzentrisch zur ersten Einzelsicke angeordnet. Die zweite Einzelsicke ist im Wesentlichen zwischen der ersten Einzelsicke und dem Bodenflächenöffnungsgitter 9 angeordnet. Die zweite Einzelsicke ist im Wesentlichen umlaufend um das Bodenflächenöffnungsgitter 9 angeordnet.
In einem anderen nicht dargestellten Ausführungsbeispiel ist die erste Einzelsicke als Wulst ausgebildet und die zweite Einzelsicke als im Wesentlichen umlaufendes Tal ausgebildet.
In einem anderen nicht dargestellten Ausführungsbeispiel sind sowohl die erste Einzelsicke als auch die zweite Einzelsicke als Tal bzw. als Wulst ausgebildet.
In einem anderen nicht dargestellten Ausführungsbeispiel sind mehr als zwei Einzelsicken, im Wesentlichen umlaufend, um das Bodenflächenöffnungsgitter 9 angeordnet. Insbesondere sind 3, 4, 5, 6, 7 usw. Einzelsicken, im Wesentlichen umlaufend um das Bodenflächenöffnungsgitter 9 angeordnet. Die Einzelsicken sind insbesondere in die Bodenplatte 5 eingeprägt, beispielsweise durch Stanzen, Umformen, Pressen, Rollen usw.
Der Boden 1 ist im Wesentlichen durch ein umformendes Fertigungsverfahrens wie beispielsweise Stanzen, Prägen usw. hergestellt.
In einem anderen Ausführungsbeispiel ist der Boden 1 durch ein urformendes Fertigungsverfahren, wie beispielsweise Gießen, insbesondere Druckgießen hergestellt.

Der Boden 1 ist in einem anderen Ausführungsbeispiel zumindest abschnittsweise aus einem Faserverbundwerkstoff ausgebildet.
Im dargestellten Ausführungsbeispiel ist der Boden 1 im Wesentlichen rechteckförmig, insbesondere quadratisch und insbesondere mit abgerundeten Ecken ausgebildet.
In einem anderen Ausführungsbeispiel kann der Boden 1 kreisförmig und/oder ellipsenförmig und/oder sternförmig und/oder eckig oder als Kombination der zuvor genannten Formen ausgebildet sein.

**Figur 2** zeigt eine Schnittdarstellung eines Bodens mit einem Dehnelement in Form einer S-förmigen Doppelsicke. Gleiche Merkmale sind mit den gleichen Bezugszeichen versehen wie in Figur 1.
Der Boden 20 weist ein Dehnelement 24 auf. Das Dehnelement 24 ist im Wesentlichen als Doppelsicke 21 ausgebildet. Die Doppelsicke 21 weist im Wesentlichen einen S-förmigen Querschnitt auf. Die Doppelsicke 21 umfasst im Wesentlichen eine erste Einzelsicke 22 und eine zweite Einzelsicke 23.

Der Boden 20 weist eine Bodenaußenseite 25 und eine Bodeninnenseite 26 auf. Die Bodenaußenseite 25 ist im Wesentlichen gegenüberliegend zur Bodeninnenseite 26 angeordnet.
Eine Medienströmungsrichtung MSR verläuft im Wesentlichen senkrecht zum Boden 20. Die Medienströmungsrichtung MSR verläuft im Wesentlichen von der Bodenaußenseite 25 in Richtung zur Bodeninnenseite 26.
In Richtung der Medienströmungsrichtung MSR kann insbesondere ein erstes Strömungsmedium wie beispielsweise Abgas durch die Bodenflächenöffnungen 16 in einen nicht dargestellten Wärmetauscher eintreten bzw. entgegen der Medienströmungsrichtung MSR aus einem nicht dargestellten Wärmetauscher austreten.
Die erste Einzelsicke ist im Wesentlichen eine talförmige Ausprägung. Die talförmige Ausprägung ist in Richtung der Medienströmungsrichtung MSR aus dem Boden 20 bzw. aus der Bodenplatte 5 ausgebildet. Die erste Einzelsicke 22 weist eine nicht näher bezeichnete runde Kante auf.
In einer anderen Ausführung kann die erste Einzelsicke 22 beispielsweise einen V-förmigen Querschnitt aufweisen.
Im dargestellten Ausführungsbeispiel weist sie im Wesentlichen einen U-förmigen Querschnitt auf.
Die Einzelsicke 22 kann in einem weiteren nicht dargestellten Ausführungsbeispiel im Wesentlichen als eckiges U ausgebildet sein
Die erste Einzelsicke 22 ist im Wesentlichen umlaufend um das Bodenflächenöffnungsgitter 9 angeordnet. Die Einzelsicke 22 ist im Wesentlichen konzentrisch zum Bodenrahmen 2, insbesondere zwischen dem Bodenrahmen 2 und dem Bodenflächenöffnungsgitter 9, angeordnet. Die erste Einzelsicke 22 ist im Wesentlichen durch ein umformendes Fertigungsverfahren wie beispielsweise Prägen, Stanzen, Rollen usw. in den Boden 20, insbesondere in die Bodenplatte 5, eingebracht.
Zwischen der ersten Einzelsicke ist eine weitere zweite Einzelsicke 23 und dem Bodenflächenöffnungsgitter 9 angeordnet. Die zweite Einzelsicke 23 ist im Wesentlichen entgegen der Medienströmungsrichtung MSR aus dem Boden 20, insbesondere aus der Bodenplatte 5 ausgebildet. Die zweite Einzelsicke weist im Wesentlichen einen U-förmigen Querschnitt auf. Der U-förmige Querschnitt kann als rundes U oder als eckiges U ausgebildet sein. In einem weiteren nicht dargestellten Ausführungsbeispiel ist der Querschnitt der zweiten Einzelsicke 23 V-förmig ausgebildet. Die zweite Einzelsicke 23 ist im Wesentlichen umlaufend um das Bodenflächenöffnungsgitter 9 angeordnet. Die zweite Einzelsicke 23 ist im Wesentlichen konzentrisch zur ersten Einzelsicke 22 angeordnet.
In einem anderen nicht dargestellten Ausführungsbeispiel sind die erste Einzelsicke 22 und die zweite Einzelsicke 23 in Richtung der Medienströmungsrichtung MSR ausgebildet.

In einer anderen nicht dargestellten Ausführungsform sind die erste Einzelsicke 22 und die zweite Einzelsicke 23 im Wesentlichen entgegen der Strömungsrichtung MSR angeordnet.
In einem anderen Ausführungsbeispiel weist der Boden 20 eine oder mehr als zwei Einzelsicken auf.

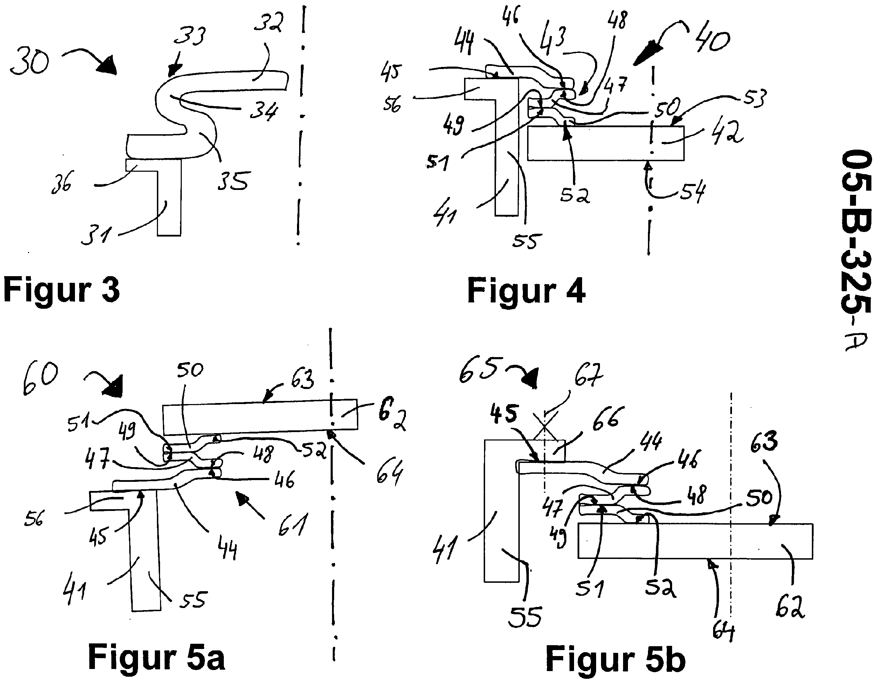

**Figur 3** zeigt eine Schnittdarstellung eines Dehnungselements in Form einer S-förmigen Doppelsicke in Verbindung mit einem Gehäusewandabschnitt.

Der Gehäuseabschnitt 31 weist einen Flanschabschnitt 36 auf. Der Flanschabschnitt 36 eines nicht weiter dargestellten Flansches ist im Wesentlichen senkrecht zum Gehäuseabschnitt 31 ausgebildet.
In einem anderen nicht dargestellten Ausführungsbeispiel kann der Flansch zum Gehäuseabschnitt 31 einen Winkel zwischen 30° und 120°, insbesondere zwischen 40° und 100° aufweisen.
Der Bodenabschnitt 32 berührt zumindest abschnittsweise den Flanschabschnitt 36. Im Wesentlichen ist ein nicht näher bezeichneter Bodenrandabschnitt des Bodenabschnitts 32 im Wesentlichen parallel zu dem Flanschabschnitt 36 angeordnet. Der Bodenrandabschnitt ist zumindest abschnittsweise mit dem Flanschabschnitt 36 stoffschlüssig, beispielsweise durch Fügen wie beispielsweise durch Schweißen, Löten, Kleben usw., und/oder formschlüssig, insbesondere wie beispielsweise durch Falzen, Verkrimpen, Bördeln usw-, verbunden.
Der Bodenabschnitt 32 weist eine Doppelsicke 33 auf. Die Doppelsicke 33 ist im Wesentlichen S-förmig ausgebildet. In nicht dargestellter Weise ist die Doppelsicke 33 im Wesentlichen umlaufend angeordnet. Die Doppelsicke 33 weist eine erste Einzelsicke 34 und eine zweite Einzelsicke 35 auf.
Die erste Einzelsicke 34 ist im Wesentlichen U-förmig, insbesondere als rundes U ausgebildet.
In einem anderen nicht dargestellten Ausführungsbeispiel ist die erste Einzelsicke eckig U-förmig oder V-förmig ausgebildet.

Die zweite Einzelsicke 35 ist im Wesentlichen U-förmig, insbesondere als rundes U ausgebildet.
In einem anderen Ausführungsbeispiel ist die zweite Einzelsicke 35 im Wesentlichen als eckiges U oder V-förmig ausgebildet.
Der Endabschnitt des Bodenabschnitts 32 ist im Wesentlichen parallel zum Bodenabschnitt 32 ausgebildet.
In einem anderen nicht dargestellten Ausführungsbeispiel weist der nicht bezeichnete Bodenendabschnitt einen Winkel zum Bodenabschnitt 32 auf. Der Winkel kann Werte zwischen 0° und 130° annehmen.

**Figur 4** zeigt eine Schnittdarstellung einer weiteren Ausführungsform eines Dehnungselements in Form eines Faltenbalgs, der mit der Bodenaußenseite verbunden ist.

Das Dehnungselement 40 ist als Faltenbalg 43 ausgebildet. Das Dehnungselement 40 bzw. der Faltenbalg 43 weisen ein erstes Rahmenelement 44, ein zweites Rahmenelement 47 und ein drittes Rahmenelement 50 auf. Das erste Rahmenelement 44, das zweite Rahmenelement 47 und das dritte Rahmenelement 50 sind zumindest abschnittsweise stoffschlüssig, insbesondere durch Löten, Schweißen, Kleben usw., und/oder formschlüssig, insbesondere durch Falzen, Bördeln, Verkrimpeln, Schrauben usw., verbunden.

Das erste Rahmenelement 44 weist einen nicht näher bezeichneten ersten Endabschnitt auf, der einen ersten Berührabschnitt 45 des ersten Rahmenelements aufweist. Ferner weist das erste Rahmenelement 44 einen nicht näher bezeichneten zweiten Endabschnitt auf, der einen zweiten Berührabschnitt 46 des ersten Rahmenelements aufweist. Das erste Rahmenelement 44 weist zwischen dem ersten Endabschnitt und dem zweiten Endabschnitt im Wesentlichen einen Knick auf. Der Knick ist im Wesentlichen umlaufend ausgebildet. Der erste nicht näher bezeichnete Endabschnitt des ersten Rahmenelements und der nicht näher bezeichnete zweite Endabschnitt des ersten Rahmenelements sind im Wesentlichen parallel zueinander ausgebildet.

Das zweite Rahmenelement 47 weist einen nicht näher bezeichneten Rahmenendabschnitt auf, der einen ersten Berührabschnitt 48 des zweiten Rahmenelements aufweist. Ferner weist das zweite Rahmenelement 47 einen zweiten nicht näher bezeichneten Rahmenendabschnitt auf, der einen zweiten Berührabschnitt 49 des zweiten Rahmenelements 47 aufweist. Zwischen dem nicht näher bezeichneten ersten Rahmenendabschnitt des zweiten Rahmenelements 47 und dem nicht näher bezeichneten zweiten Rahmenendabschnitt des zweiten Rahmenelements 47 ist im Wesentlichen ein Knick im zweiten Rahmenelement 47 angebracht. Der nicht näher bezeichnete Knick ist im Wesentlichen umlaufend im zweiten Rahmenelement 47 angeordnet. Der nicht näher bezeichnete erste Rahmenendabschnitt des zweiten Rahmenelements ist zum nicht näher bezeichneten zweiten Rahmenendabschnitt des zweiten Rahmenelements 47 im Wesentlichen parallel angeordnet.

Ein drittes Rahmenelement 50 weist einen nicht näher bezeichneten Rahmenendabschnitt des dritten Rahmenelements 50 auf, der einen ersten Berührabschnitt 51 des dritten Rahmenelements 50 aufweist. Ferner weist das dritte Rahmenelement 50 einen zweiten nicht näher bezeichneten Rahmenendabschnitt auf, der einen zweiten Berührabschnitt 52 des dritten Rahmenelements 50 aufweist. Zwischen dem nicht näher bezeichneten ersten Endabschnitt des dritten Rahmenelements 50 und dem nicht näher bezeichneten zweiten Endabschnitt des dritten Rahmenelements 50 ist ein Knick in das dritte Rahmenelement 50 eingebracht. Der Knick ist im Wesentlichen umlaufend in das dritte Rahmenelement 50 angebracht. Der nicht näher bezeichnete erste Endabschnitt des dritten Rahmenelements 50 ist im Wesentlichen parallel zum nicht näher bezeichneten zweiten Endabschnitt des dritten Rahmenelements 50 angeordnet.

Der Gehäuseabschnitt 41 weist einen Gehäusewandabschnitt 55 und einen Gehäuseflanschabschnitt 56 auf. Der Gehäuseflanschabschnitt 56 ist der Abschnitt eines nicht weiter dargestellten Gehäuseflanschs. Der Gehäuseflanschabschnitt 56 berührt zumindest abschnittsweise den ersten Berührabschnitt 45 des ersten Rahmenelements. Insbesondere ist der erste Berührabschnitt 45 des ersten Rahmenelements zumindest abschnittsweise mit dem Gehäuseflanschabschnitt 56 stoffschlüssig, insbesondere durch Schweißen, Löten, Kleben usw., und/oder formschlüssig, insbesondere durch Verkrimpen, Falzen, Bördeln, Schrauben usw., mit dem Gehäuseflanschabschnitt 56 verbunden. Der Gehäuseflanschabschnitt 56 ist im Wesentlichen senkrecht zu dem Gehäusewandabschnitt 55 ausgebildet.
In einer anderen nicht dargestellten Ausführungsform weist der Gehäuseflanschabschnitt 56 einen nicht näher bezeichneten Winkel zu dem Gehäusewandabschnitt 55 auf. Der nicht näher bezeichnete Winkel nimmt im Wesentlichen Werte zwischen 0° und 130°, insbesondere Werte zwischen 45° und 110° an. Der erste Berührabschnitt 45 des ersten Rahmenelements ist im Wesentlichen parallel zu dem nicht näher bezeichneten ersten Endabschnitt des ersten Rahmenelements angeordnet. Der zweite nicht näher bezeichnete Endabschnitt des ersten Rahmenelements 44 ist im Wesentlichen zum ersten nicht näher bezeichneten Endabschnitt des zweiten Rahmenelements 47 im Wesentlichen parallel angeordnet. Der zweite nicht näher bezeichnete Endabschnitt des zweiten Rahmenelements 47 ist im Wesentlichen parallel zum nicht näher bezeichneten ersten Endabschnitt des dritten Rahmenelements 50 angeordnet.

Der Bodenabschnitt 42 weist eine Bodenaußenseite 53 und eine Bodeninnenseite 54 auf. Die Bodenaußenseite ist im Wesentlichen parallel zur Bodeninnenseite 54 angeordnet.

In einem anderen nicht dargestellten Ausführungsbeispiel kann die Bodenaußenseite 53 einen Winkel zur Bodeninnenseite 54 aufweisen. Der nicht näher bezeichnete Winkel nimmt Werte zwischen 0° und 90°, insbesondere Werte zwischen 0° und 40° an.
Der zweite Berührabschnitt 46 des ersten Rahmenelements 44 berührt zumindest abschnittsweise den ersten Berührabschnitt 48 des zweiten Rahmenelements 47. Insbesondere ist der zweite Berührabschnitt des ersten Rahmenelements 44 mit dem ersten Berührabschnitt 48 des zweiten Rahmenelements 47 stoffschlüssig, insbesondere durch Schweißen, Löten, Kleben usw., und/oder formschlüssig, insbesondere durch Verkrimpen, Falzen, Bördeln, Verschrauben usw., verbunden.
Der zweite Berührabschnitt 49 des zweiten Rahmenelements 47 berührt zumindest abschnittsweise den ersten Berührabschnitt 51 des dritten Rahmenelements 50. Insbesondere ist der zweite Berührabschnitt 49 des zweiten Rahmenelements 47 mit dem ersten Berührabschnitt 51 des dritten Rahmenelements 50 stoffschlüssig, insbesondere durch Schweißen, Löten, Kleben usw., und/oder formschlüssig, insbesondere durch Falzen, Bördeln, Verkrimpen, Schrauben usw., verbunden.
Der zweite Berührabschnitt 52 des dritten Rahmenelements 50 berührt zumindest abschnittsweise die Bodenaußenseite 53 des Bodenabschnitts 42. Der zweite Berührabschnitt 52 des dritten Rahmenelements 50 ist stoffschlüssig, insbesondere durch Schweißen, Löten, Kleben usw., und/oder formschlüssig, insbesondere durch Verkrimpen, Falzen, Bördeln, Schrauben usw-, mit der Bodenaußenseite 53 des Bodenabschnitts 42 verbunden.

In einem anderen nicht dargestellten Ausführungsbeispiel sind das erste Rahmenelement 44, das zweite Rahmenelement 47 und das dritte Rahmenelement 50 einteilig ausgebildet.
In einem anderen nicht dargestellten Ausführungsbeispiel sind der Bodenabschnitt 42, das erste Rahmenelement 44, das zweite Rahmenelement 47 und das dritte Rahmenelement 50 einteilig ausgeführt.

Der Faltenbalg 43 bzw. das erste Rahmenelement 44 und/oder das zweite Rahmenelement 47 und/oder das dritte Rahmenelement 50 sind aus einem Material mit einer geringen Dichte, wie beispielsweise aus einem Metall wie beispielsweise Aluminium, Edelstahl oder aus einem Kunststoff wie beispielsweise aus einem Elastomer wie Gummi oder aus einem Polymer usw. ausgebildet.
Insbesondere kann der Faltenbalg 43 bzw. das erste Rahmenelement 44 und/oder das zweite Rahmenelement 47 und/oder das dritte Rahmenelement 50 zumindest abschnittsweise als Dichtelement ausgebildet sein.
Der Faltenbalg 43 bzw., das erste Rahmenelement 44 und/oder das zweite Rahmenelement 47 und/oder das dritte Rahmenelement 50 kann in einem anderen nicht dargestellten Ausführungsbeispiel aus einem Faserverbundwerkstoff ausgebildet sein.

Der Bodenabschnitt 42 des nicht dargestellten Bodens kann insbesondere aus einem Metall, beispielsweise aus einem Metall mit einer geringen Dichte wie beispielsweise Aluminium oder Edelstahl, oder aus einem Kunststoff, insbesondere aus einem Elastomer oder aus einem Polymer ausgebildet sein.

Der Gehäuseabschnitt 41 des nicht weiter dargestellten Gehäuses bzw. das Gehäuse kann aus einem gegossenen Metall wie beispielsweise aus Grauguss oder aus Aluminiumguss, insbesondere aus Aluminiumdruckguss oder aus einem Aluminiumguss mit einer verlorenen Form wie beispielsweise aus Sandguss ausgebildet sein.
In einem anderen nicht dargestellten Ausführungsbeispiel ist das nicht dargestellte Gehäuse mit dem Gehäuseabschnitt 41 aus einem Kunststoff wie beispielsweise aus einem Duromer oder einem Elastomer ausgebildet.
In einem anderen nicht dargestellten Ausführungsbeispiel weist der Faltenbalg 43 zwischen einem und zwei oder mehr als drei Rahmenelemente auf. **Figur 5a** zeigt eine Schnittdarstellung einer weiteren Ausführung eines Dehnungselements in Form eines Faltenbalgs, der mit der Bodeninnenseite verbunden ist. Gleiche Merkmale sind mit dem gleichen Bezugszeichen versehen, wie in den vorherigen Figuren.

Im Unterschied zu Figur 4 ist in Figur 5 das dritte Rahmenelement 50 mit der Bodeninnenseite 64 des Bodenabschnitts 42 verbunden. Der Faltenbalg 61 weist ein erstes Rahmenelement 44, ein zweites Rahmenelement 47 und ein drittes Rahmenelement 50 auf.
Der Bodenabschnitt 62 weist eine Bodenaußenseite 63 und eine Bodeninnenseite 64 auf. Die Bodenaußenseite 63 ist im Wesentlichen parallel zur Bodeninnenseite 64 angeordnet.
Der zweite Berührabschnitt 51 des dritten Rahmenelements 50 berührt zumindest abschnittsweise die Bodeninnenseite 64. Der zweite Berührabschnitt 52 des dritten Rahmenelements 50 ist zumindest abschnittsweise mit dem Bodenabschnitt 62 stoffschlüssig, insbesondere durch Löten, Schweißen, Kleben usw., und/oder formschlüssig, insbesondere durch Falzen, Verkrimpen, Bördeln, Schrauben usw., verbunden. In dem dargestellten Ausführungsbeispiel weist der Faltenbalg drei Rahmenelemente auf.
In einem anderen nicht dargestellten Ausführungsbeispiel weist der Faltenbalg ein bis zwei oder mehr als drei Rahmenelemente auf.
In einem weiteren nicht dargestellten Ausführungsbeispiel sind das erste Rahmenelement 44 und/oder das zweite Rahmenelement 47 und/oder das dritte Rahmenelement 50 einteilig ausgeführt.
In einem anderen nicht dargestellten Ausführungsbeispiel ist der nicht mehr dargestellte Boden mit dem Bodenabschnitt 62, das erste Rahmenelement 44 und/oder das zweite Rahmenelement 47 und/oder das dritte Rahmenelement 50 einteilig ausgeführt.

Das erste Rahmenelement 44 und/oder das zweite Rahmenelement und/oder das dritte Rahmenelement 50 und/oder der Boden mit dem Bodenabschnitt 62 sind beispielsweise aus einem Metall, insbesondere mit geringer Dichte wie beispielsweise Aluminium oder aus Edelstahl, und/oder aus einem Kunststoff wie beispielsweise aus einem Elastomer, Gummi oder aus einem Faserverbundwerkstoff ausgebildet.

Der Faltenbalg 61 bzw. das erste Rahmenelemente 44 und/oder das zweite Rahmenelement 47 und/oder das dritte Rahmenelement 50 sind zumindest abschnittsweise als Dichtelement ausgebildet.

**Figur 5b** zeigt eine Schnittdarstellung einer weiteren Ausführung eines Dehnungselements 65 in Form eines Faltenbalgs mit einem nach innen zeigenden Gehäuseflansch 66. Gleiche Elemente sind mit den gleichen Bezugszeichen versehen wie in den vorherigen Figuren.
Im Unterschied zu Figur 5a weißt der Gehäuseabschnitt 41 einen Gehäuseflansch 66 auf. Der Gehäuseflansch 66 ist in Richtung des nicht näher bezeichneten Gehäuseinneren ausgebildet. Auf diese Weise kann Bauraum eingespart werden. Insbesondere ist der Bodenabschnitt 62 eines nicht näher bezeichneten Bodens im Gehäuseinneren eines nicht näher bezeichneten Gehäuses mit dem Gehäuseabschnitt 41 angeordnet. Auf diese Weise kann Bauraum in vorteilhafter Weise eingespart werden.

In einer weiteren Ausführungsform werden die Rohre mit dem nicht näher bezeichneten Boden mit dem Bodenabschnitt 62 in einem vorgelagerten Fertigungsprozess formschlüssig und/oder stoffschlüssig, insbesondere durch Schweißen, Löten, Kleben, usw. zumindest abschnittsweise verbunden. Die mit dem Boden zumindest abschnittsweise verbundenen Rohre, insbesondere Flachrohre, werden durch eine nicht dargestellte Öffnung im Gehäuse des Wärmetauschers in das Gehäuseinnere des Wärmetauschers eingeführt, bis das erste Rahmenelement 44 mit dem ersten Berührabschnitt 45 den Gehäuseflansch 66 zumindest abschnittsweise berührt.
In einem weiteren Fertigungsschritt wird das erste Rahmenelement 44 mit dem Gehäuseflansch 66 zumindest abschnittsweise formschlüssig, insbesondere durch Verbindungselemente 67 wie Schrauben und Muttern, Nieten, usw., und/oder stoffschlüssig, insbesondere durch Schweißen, Löten, Kleben, usw., verbunden.

Eine eventuelle Demontage der Rohre und des Bodens insbesondere zu Reparaturzwecken ist ebenfalls möglich.

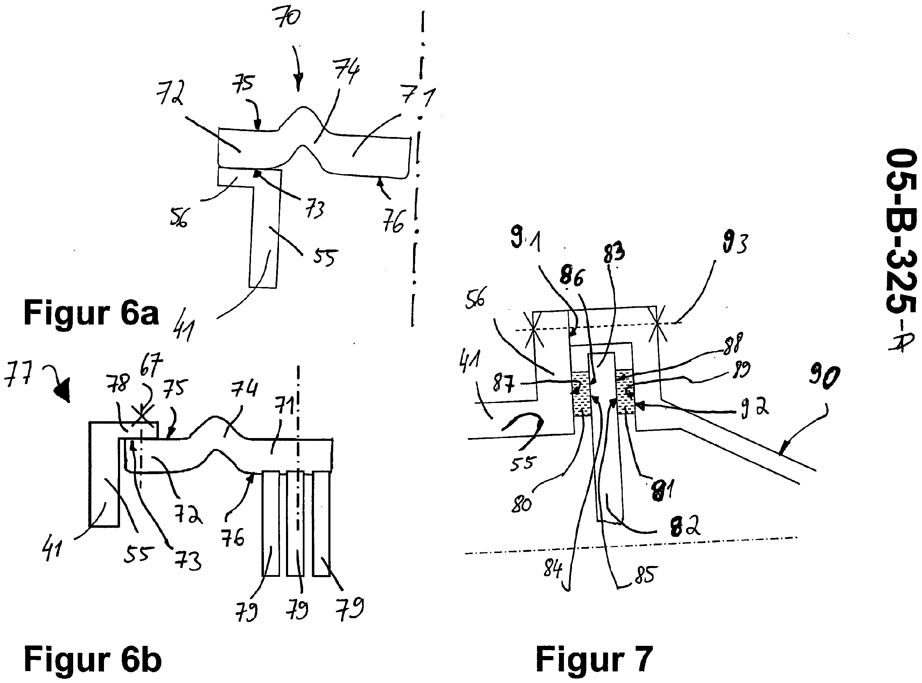

**Figur 6a** zeigt eine Schnittdarstellung einer weiteren Ausführung eines Dehnungselements in Form eines in den Boden eingebrachten Wulstes. Gleiche Merkmale sind mit den gleichen Bezugszeichen versehen wie in den vorherigen Figuren.

Der Gehäuseabschnitt 41 eines nicht weiter dargestellten Gehäuses weist einen Gehäusewandabschnitt 55 und einen Gehäuseflanschabschnitt 56 auf. Der Bodenabschnitt 71 weist einen Bodenendabschnitt 72 mit einer Bodenendabschnittsfläche 73 auf. Ferner weist der Bodenabschnitt 71 ein Dehnungselement 70 in Form eines Wulstes 74 auf.
Der Bodenendabschnitt 72 ist im Wesentlichen parallel zu dem Gehäuseflanschabschnitt 56 ausgebildet.
Die Bodenendabschnittsfläche 73 berührt zumindest abschnittsweise den Gehäuseflanschabschnitt 56 und ist insbesondere stoffschlüssig, beispielsweise durch Schweißen, Löten, Kleben usw-, und/oder formschlüssig, insbesondere durch Verkrimpen, Falzen, Bördeln, Schrauben usw., verbunden. Der Wulst 74 weist im Wesentlichen einen U-förmigen Querschnitt auf. Im dargestellten Ausführungsbeispiel ist der Querschnitt als im Wesentlichen rundes U ausgebildet.

In einem anderen dargestellten Ausführungsbeispiel kann das U im Wesentlichen als eckiges U ausgebildet sein. In einem weiteren Ausführungsbeispiel kann der Querschnitt des Wulstes 74 V-förmig ausgebildet sein.
Der Wulst 74 ist im Wesentlichen in einer nicht weiterbezeichneten Richtung, die von der Bodenabschnittsinnenseite 76 zur Bodenabschnittsaußenseite 75 zeigt, aus dem Bodenabschnitt 71 ausgebildet. Der Bodenabschnitt 71 des nicht näher bezeichneten Bodens ist mit dem Wulst 74 im Wesentlichen aus einem Metall, insbesondere mit einer geringen Dichte wie beispielsweise aus Aluminium oder aus Edelstahl, ausgebildet. Ferner kann der Boden des Bodenabschnitts 71 mit dem Wulst 74 aus einem Kunststoff wie beispielsweise aus einem Polymer, Elastomer oder aus einem Faserverbundwerkstoff oder aus Keramik ausgebildet sein.

**Figur 6b** zeigt eine Schnittdarstellung einer weiteren Ausführung eines Dehnungselements 77 in Form eines in den Boden eingebrachten Wulstes 74, wobei der Gehäuseflansch 78 in das Gehäuseinnere zeigt. Gleiche Merkmale sind mit den gleichen Bezugszeichen versehen wie in den vorherigen Figuren. Im Unterschied zu Figur 6a zeigt der Gehäuseflansch 78 in Richtung des Gehäuseinneren eines nicht näher bezeichneten Gehäuses mit dem Gehäuseabschnitt 41.

Im Unterschied zu Figur 6a weißt der Gehäuseabschnitt 41 einen Gehäuseflansch 78 auf. Der Gehäuseflansch 78 ist in Richtung des nicht näher bezeichneten Gehäuseinneren ausgebildet. Auf diese Weise kann Bauraum eingespart werden. Insbesondere ist der Bodenabschnitt 71 eines nicht näher bezeichneten Bodens im Gehäuseinneren eines nicht näher bezeichneten Gehäuses mit dem Gehäuseabschnitt 41 angeordnet. Auf diese Weise kann Bauraum in vorteilhafter Weise eingespart werden.

In einer weiteren Ausführungsform werden die Rohre 79 mit dem nicht näher bezeichneten Boden mit dem Bodenabschnitt 71 in einem vorgelagerten Fertigungsprozess formschlüssig und/oder stoffschlüssig, insbesondere durch Schweißen, Löten, Kleben, usw. zumindest abschnittsweise verbunden.

Die mit dem Boden zumindest abschnittsweise verbundenen Rohre 79, insbesondere Flachrohre, werden durch eine nicht dargestellte Öffnung im Gehäuse des Wärmetauschers in das Gehäuseinnere des Wärmetauschers eingeführt, bis der Bodenendabschnitt 72 mit der Bodenendabschnittsfläche 73 den Gehäuseflansch 78 zumindest abschnittsweise berührt.

In einem weiteren Fertigungsschritt wird der Bodenendabschnitt 72 mit dem Gehäuseflansch 78 zumindest abschnittsweise formschlüssig, insbesondere durch Verbindungselemente 67 wie Schrauben und Muttern, Nieten, usw., und/oder stoffschlüssig, insbesondere durch Schweißen, Löten, Kleben, usw., verbunden.

Eine eventuelle Demontage der Rohre 79 und des Bodens insbesondere zu Reparaturzwecken ist ebenfalls möglich.

**Figur 7** zeigt eine Schnittdarstellung eines Gehäuseabschnitts in Verbindung mit einem Diffusorabschnitt, mit einem ersten Dehnungselement das zwischen dem Gehäuseabschnitt und einem Bodenabschnitt angeordnet ist sowie ein zweites Dehnungselement, das zwischen dem Diffusorabschnitt und dem Bodenabschnitt angeordnet ist. Gleiche Merkmale sind mit dem gleichen Bezugszeichen versehen wie in den vorherigen Figuren.

Der Diffusorabschnitt 90 eines nicht weiter dargestellten Diffusors kann als Eintrittsdiffusor oder als Austrittsdiffusor ausgebildet sein.

Der Diffusorabschnitt 90 weist einen Diffusorendabschnitt 91 und eine Diffusorberührfläche 92 auf. Der Diffusorendabschnitt 91 berührt zumindest abschnittsweise den Gehäuseflanschabschnitt 56. Insbesondere ist der Diffusorendabschnitt 91 zumindest abschnittsweise mit dem Gehäuseflanschabschnitt 56 stoffschlüssig, insbesondere durch Schweißen, Löten, Kleben usw., und/oder formschlüssig, insbesondere durch Schrauben, Verkrimpen, Falzen usw., verbunden. Der Diffusorabschnitt 90 des nicht weiter dargestellten Diffusors ist mit zumindest einem schematisch dargestellten Befestigungselement 93, wie beispielsweise einer Schraube, mit dem Gehäuseflanschabschnitt 56 verbunden.
Der Bodenabschnitt 82 des nicht weiter dargestellten Bodens ist zwischen dem Diffusorabschnitt 90 eines Diffusors und dem Gehäuseflanschabschnitt 56 eines nicht weiter dargestellten Gehäuses angeordnet. Insbesondere ist der Bodenabschnitt 82 im Wesentlichen parallel zu dem Diffusorendabschnitt 91 und zu dem Gehäuseflanschabschnitt 56 angeordnet. Zwischen dem Bodenabschnitt 82 und dem Gehäuseflanschabschnitt 56 ist ein erstes Dehnungselement 80 angeordnet.

Das erste Dehnungselement 80 berührt zumindest abschnittsweise mit der ersten Berührfläche 86 den ersten Bodenendabschnittsbereich 84 des Bodenendabschnitts 83. Ferner berührt das erste Dehnungselement 80 mit der zweiten Berührfläche 87 den Gehäuseflanschabschnitt 56. Das erste Dehnungselement 80 ist im Wesentlichen aus einem elastischen Material wie beispielsweise Gummi oder einem anderen Kunststoff ausgebildet. Ferner ist das erste Dehnungselement 80 als Dichtungselement ausgebildet.

Das erste Dehnungselement 80 ist im Wesentlichen ringförmig umlaufend ausgebildet. In einem anderen nicht dargestellten Ausführungsbeispiel kann das erste Dehnungselement 80 als O-Ring ausgebildet sein. Im dargestellten Ausführungsbeispiel weist das erste Dehnungselement 80 einen im Wesentlichen rechteckförmigen Querschnitt auf.
In einem anderen Ausführungsbeispiel kann das erste Dehnungselement 80 einen runden und/oder ovalen oder quadratischen Querschnitt aufweisen. In einem anderen Ausführungsbeispiel kann der Querschnitt eine Kombination der zuvor genannten Formen aufweisen.

Ein zweites Dehnungselement 81 ist zwischen dem Bodenabschnitt 82 und dem Diffusorabschnitt 90 angeordnet. Das zweite Dehnungselement 81 berührt zumindest abschnittsweise mit einer ersten Berührfläche 88 die zweite Bodenendabschnittsberührfläche 85. Im Wesentlichen ist die erste Berührfläche 88 parallel zur zweiten Bodenendabschnittsberührfläche 85 angeordnet. Ferner berührt das erste Dehnungselement 81 zumindest abschnittsweise mit der zweiten Berührfläche des zweiten Dehnungselements die Diffursorberührfläche 92. Im Wesentlichen ist die Diffusorberührfläche 92 parallel zur zweiten Berührfläche 89 des zweiten Dehnungselements ausgebildet.

Das erste Dehnungselement 81 ist zumindest abschnittsweise aus einem elastischen Material wie beispielsweise Kunststoff oder Gummi oder aus einem anderen Elastomer ausgebildet.
Das zweite Dehnungselement 81 weist im dargestellten Ausführungsbeispiel im Wesentlichen einen rechteckförmigen Querschnitt auf.
In einem anderen Ausführungsbeispiel kann das zweite Dehnungselement 81 einen ovalen Querschnitt und/oder einen runden Querschnitt und/oder einen quadratischen Querschnitt aufweisen.
In einer anderen Ausführungsform weist das zweite Dehnungselement 81 einen Querschnitt auf, der als Kombination aus den zuvor genannten Formen ausgebildet ist. Das zweite Dehnungselement 81 kann beispielsweise ein O-Ring sein. Das zweite Dehnungselement 81 ist im Wesentlichen ringförmig umlaufend ausgebildet.

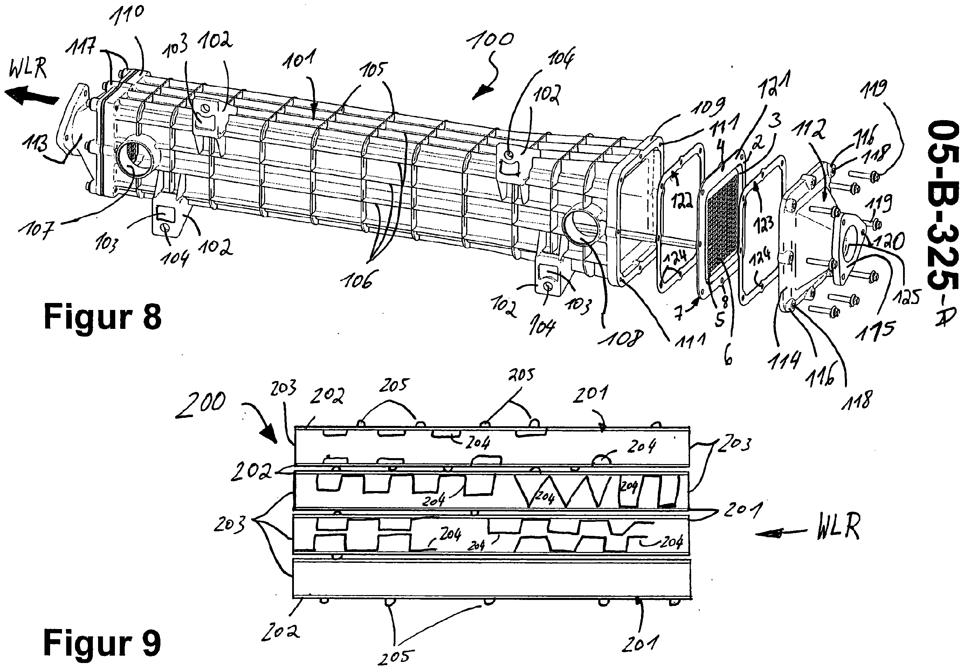

**Figur 8** zeigt eine Explosionsdarstellung eines Wärmetauschers 100.

Der Wärmetauscher 100 weist ein Gehäuse 101 auf. Das Gehäuse 101 ist im Wesentlichen als Hohlkörper ausgebildet. Das Gehäuse 101 weist im Wesentlichen einen rechteckförmigen, insbesondere quadratischen, Querschnitt auf.
In einem anderen nicht dargestellten Ausführungsbeispiel weist das Gehäuse 101 einen runden oder ovalen Querschnitt auf. Das Gehäuse 101 ist im dargestellten Ausführungsbeispiel aus einem Metallgussmaterial ausgebildet. Insbesondere ist das Gehäuse 101 aus Grauguss oder aus Stahlguss oder aus Aluminium ausgebildet.
In einem anderen nicht dargestellten Ausführungsbeispiel ist das Gehäuse 101 aus Kunststoff oder aus Keramik oder aus einem Faserverbundwerkstoff ausgebildet.

Befestigungskörper 102 dienen zur Befestigung des Gehäuses 101 beispielsweise an einer Antriebseinheit wie eines Verbrennungsmotors. Der Befestigungskörper 102 weist eine im Wesentlichen rechteckförmige Materialaussparung 103 und eine im Wesentlichen runde Befestigungsöffnung 104 auf. Durch die Öffnung 104 können nicht weiter dargestellte Befestigungselemente gesteckt werden. Im dargestellten Ausführungsbeispiel ist der Befestigungskörper 102 im Wesentlichen einteilig mit dem Gehäuse 101 ausgebildet.
In einem anderen Ausführungsbeispiel können die Befestigungskörper 102 mit dem Gehäuse 101 beispielsweise stoffschlüssig durch Schweißen, Löten, Kleben usw. verbunden werden.

Das Gehäuse 101 weist erste Verstärkungsrippen 105 auf. Benachbarte erste Verstärkungsrippen sind im Wesentlichen parallel zueinander angeordnet. Die ersten Verstärkungsrippen 105 verlaufen im Wesentlichen von einem ersten Gehäuseflansch 109 zu einem zweiten Gehäuseflansch 110 oder umgekehrt.
Ferner weist das Gehäuse 101 zweite Verstärkungsrippen 106 auf. Benachbarte zweite Verstärkungsrippen 106 sind im Wesentlichen parallel zueinander angeordnet. Die zweiten Verstärkungsrippen 106 sind im Wesentlichen umlaufend um das Gehäuse 101 angeordnet. Die zweiten Verstärkungsrippen 106 sind im Wesentlichen senkrecht zu den ersten Verstärkungsrippen 105 angeordnet.
In einem anderen nicht dargestellten Ausführungsbeispiel können die ersten Verstärkungsrippen 105 mit den zweiten Verstärkungsrippen 106 einen Winkel zwischen 0° und 90°, insbesondere zwischen 20° und 70° aufweisen.

Das Gehäuse 101 weist ferner einen ersten Anschlussstutzen 107 und einen zweiten Anschlussstutzen 108 auf. Der erste Anschlussstutzen 107 und/oder der zweite Anschlussstutzen 108 sind im Wesentlichen zylinderförmig ausgebildet. Durch die Anschlussstutzen 107 und 108 strömt insbesondere Kühlmittel in den Wärmetauscher 100 hinein und/oder aus diesem heraus.

Das Kühlmittel ist insbesondere eine wasserhaltige Kühlflüssigkeit oder ein Gas wie beispielsweise Luft.

Das Gehäuse 101 weist an den nicht näher bezeichneten Enden einen ersten Gehäuseflansch 109 und einen zweiten Gehäuseflansch 110 auf. Insbesondere ist der erste Gehäuseflansch 109 an dem einen Ende angeordnet und der zweite Gehäuseflansch 110 an dem anderen nicht näher bezeichneten Ende angeordnet. Der erste Gehäuseflansch 109 und/oder der zweite Gehäuseflansch 110 sind im Wesentlichen als rechteckförmiger Rahmen mit abgerundeten Ecken ausgebildet.
In einem anderen Ausführungsbeispiel kann der erste Gehäuseflansch 109 und/oder der zweite Gehäuseflansch 110 und/oder oval ausgebildet sein.

Der erste Gehäuseflansch 109 weist zumindest eine Öffnung 111, die im Wesentlichen rund ausgebildet ist, auf. Im dargestellten Ausführungsbeispiel weist der erste Gehäuseflansch 109 acht Öffnungen 111 auf. In einem anderen Ausführungsbeispiel kann der erste Gehäuseflansch 109 und/oder der zweite Gehäuseflansch 110 ein bis acht oder mehr als acht Öffnungen 111 aufweisen.
Insbesondere weisen die Öffnungen 111 ein nicht näher bezeichnetes Gewinde auf, in das Befestigungselement 119 wie beispielsweise Schrauben eingeschraubt werden können.

Der Wärmetauscher 100 weist einen ersten Diffusor 112 und einen zweiten Diffusor 113 auf. Der erste Diffusor 112 ist im Wesentlichen identisch wie der zweite Diffusor 113 ausgebildet. In einem anderen Ausführungsbeispiel kann der erste Diffusor 112 anders als der zweite Diffusor 113 ausgebildet sein.

Im dargestellten Ausführungsbeispiel weist der erste Diffusor 112 einen ersten Flansch 114 und einen zweiten Flansch 115 auf. Der erste Diffusor 112 ist im Wesentlichen pyramidenförmig als vierseitige Pyramide ausgebildet. Aus dem Boden der vierseitigen Pyramide ist im Wesentlichen der erste Flansch 114 als Rahmenelement ausgebildet. Aus der Spitze der vierseitigen Pyramide ist im Wesentlichen der zweite Flansch 115 ausgebildet. Der erste Flansch 114 ist im Wesentlichen rahmenförmig ausgebildet.
Aus dem ersten Flansch 114 sind Befestigungszylinder 116 ausgebildet. Die Befestigungszylinder 116 weisen Öffnungen 118, insbesondere runde Öffnungen, auf. Durch die Öffnungen 118 werden im dargestellten Ausführungsbeispiel Befestigungselemente 119, insbesondere Schrauben, durchgesteckt. Im dargestellten Ausführungsbeispiel weist der erste Flansch 114 acht Befestigungszylinder 116 mit jeweils einer Öffnung 118 auf.
In einem anderen Ausführungsbeispiel weist der erste Flansch 114 ein bis acht oder mehr als acht Befestigungszylinder 116 mit jeweils einer Öffnung 118 auf.
Aus dem zweiten Gehäuseflansch sind zweite Befestigungszylinder 117 ausgebildet. Im dargestellten Ausführungsbeispiel sind die Befestigungszylinder 117 identisch mit den Befestigungszylindern 116.

In einem anderen dargestellten Ausführungsbeispiel sind die Befestigungszylinder 117 anders als die Befestigungszylinder 116 ausgebildet.
Der aus der Spitze der vierseitigen Pyramide ausgebildete zweite Flansch 115 ist im Wesentlichen als dreieckförmiger Körper ausgebildet. Die nicht näher bezeichneten Ecken des zweiten Flanschs sind im Wesentlichen abgerundet. Benachbart zu den nicht näher bezeichneten Ecken ist jeweils eine Öffnung 120 in den zweiten Flansch 115 angebracht. Im dargestellten Ausführungsbeispiel weist der Flansch 115 insgesamt drei Öffnungen 120 aus. In einem anderen Ausführungsbeispiel kann der Flansch 115 ein bis drei oder mehr als drei Öffnungen 120 aufweisen.
Im Zentrum des Flansches 115 ist eine Öffnung 125 angeordnet. Durch die Öffnung 125 strömt im Wesentlichen das zu kühlende Medium, wie beispielsweise Abgas in den Wärmetauscher 101 bzw. aus diesem heraus.

Zwischen dem Flansch 115 und dem ersten Gehäuseflansch 109 sind im Wesentlichen parallel zueinander und parallel zum ersten Gehäuseflansch 109 und/oder parallel zum ersten Flansch des Diffusors 114 ein Boden 121 sowie ein erstes Rahmenelement 122 und ein zweites Rahmenelement 123 angeordnet.
Der Boden 121 ist im Wesentlichen zwischen dem ersten Rahmenelement 122 und dem zweiten Rahmenelement 123 angeordnet. Der Boden 121 ist im Wesentlichen konzentrisch zu dem ersten Rahmenelement 122 und zu dem zweiten Rahmenelement 123 angeordnet. Im dargestellten Ausführungsbeispiel entspricht der Boden 121 dem Boden 1 aus Figur 1 bzw. dem Boden 20 aus Figur 2. In einem anderen Ausführungsbeispiel kann der Boden 121 anders als der Boden 1 der Figur 1 bzw. der Boden 20 der Figur 2 ausgebildet sein.
Das erste Rahmenelement 122 und/oder das zweite Rahmenelement 123 weisen Öffnungen 124 auf. Insbesondere sind die Öffnungen 124 als nicht näher bezeichnete Löcher ausgebildet. Der erste Gehäuseflansch 109, der erste Flansch des Diffusors 114, der Boden 121, das erste Rahmenelement 122 und das zweite Rahmenelement 123 weisen im Wesentlichen dasselbe Lochbild auf.
Das erste Rahmenelement 122 und das zweite Rahmenelement 123 sind im Wesentlichen als Bodenrahmen 2 der Figur 1 bzw. der Figur 2 ausgebildet. Das Rahmenelement 122 und das Rahmenelement 123 können aus Metall wie beispielsweise aus Aluminium oder Edelstahl oder aus Kunststoff, wie beispielsweise aus einem Elastomer ausgebildet sein.
Ferner kann das erste Rahmenelement 122 und das zweite Rahmenelement 123 als Dichtelement aus Gummi ausgebildet sein.
Durch die Befestigungselemente 119, insbesondere durch die Schrauben, wird der erste Diffusor 112, das erste Rahmenelement 122, das zweite Rahmenelement 123 und der Boden 121 mit dem ersten Gehäuseflansch 109 des Gehäuses 101 verbunden. Im dargestellten Ausführungsbeispiel ist der zweite Diffusor 113 auf die gleiche Weise mit dem zweiten Gehäuseflansch 110 des Gehäuses 101 verbunden.
In einem anderen Ausführungsbeispiel sind der erste Diffusor 112 und/oder der zweite Diffusor 113 stoffschlüssig beispielsweise durch Verkrimpen, Falzen, Umbördeln und/oder stoffschlüssig durch Verschweißen, Löten, Verkleben mit dem Gehäuse 101 verbunden.

**Figur 9** zeigt eine Schnittdarstellung eines Flachrohrbündels mit turbulenzerzeugenden Elementen.

Das Flachrohrbündel 200 weist eine Anzahl von Flachrohren 201 auf, die im Wesentlichen parallel zueinander angeordnet sind. Das Flachrohrbündel 200 wird insbesondere in ein Gehäuse 101 des Wärmetauschers 100 der Figur 8 eingebracht.
Die Flachrohre 201 weisen eine Flachrohrwand 202 auf. Ferner weisen die Flachrohre 201 jeweils mindestens eine Flachrohröffnung 203, insbesondere jeweils zwei Flachrohröffnungen 203, je Flachrohr 201 auf.

Aus den Flachrohren 201 sind Noppen 205 aus der Flachrohrwand 202, insbesondere durch ein umformendes Fertigungsverfahren wie beispielsweise Prägen, Stanzen, Pressen usw. nach außen ausgebildet. Mit den Noppen 205 stützen sich benachbarte Flachrohre 201 gegeneinander ab. Zumindest eine Noppe 205 eines Flachrohres 201 berührt zumindest abschnittsweise die Flachrohrwand 202 eines benachbarten angeordneten Flachrohres 201. Ferner können aus der Flachrohrwand 202 turbulenzerzeugende Elemente 204 ebenfalls in Form von Noppen oder Winglets in Richtung des nicht näher bezeichneten Rohrinneren eines Flachrohres 201 ausgebildet sein. Insbesondere sind die turbulenzerzeugende Elemente 204 durch ein umformendes Fertigungsverfahrens wie Stanzen, Prägen, Pressen usw. eingebracht.

Ferner können die turbulenzerzeugenden Elemente 204 als Turbulenzeinlagen ausgebildet sein. Diese einschiebbaren Turbulenzeinlagen sind insbesondere mittels eines umformenden Fertigungsverfahrens in ein Blechelement eingeprägt oder eingestanzt. Über die Flachrohröffnung 203 sind die einschiebbaren Turbulenzeinlagen 204 in zumindest ein Flachrohr 201 einbringbar. Über die Noppen 205 der Flachrohre 201, die benachbart zu einer nicht dargestellten Gehäusewand eines Gehäuses eines Wärmetauschers angeordnet sind, wird das Flachrohrbündel 200 gegen die nicht dargestellte Gehäusewand des Gehäuses des Wärmetauschers abgestützt.

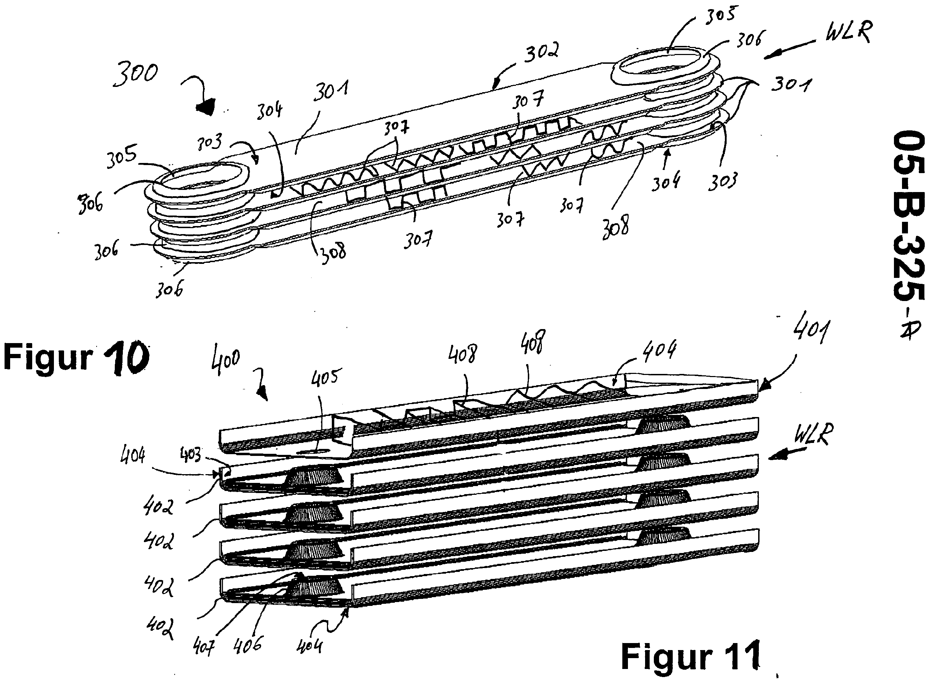

**Figur 10** zeigt ein Flachrohrbündel 300 als Scheibenstapel 302.

Das Flachrohrbündel 300 weist eine Anzahl von Flachrohren 301 auf.

Ein Flachrohr 301 weist insbesondere eine Oberscheibe 303 und eine Unterscheibe 304 auf. Die Oberscheibe 303 und die Unterscheibe 304 sind zumindest abschnittsweise miteinander stoffschlüssig, insbesondere durch Schweißen, Löten, Kleben usw., und/oder formschlüssig, insbesondere durch Falzen, Verkrimpen, Bördeln usw., miteinander verbunden.

Die Oberscheiben 303 und/oder 304 weisen jeweils eine, insbesondere zwei, Scheibenöffnungen 305 auf.
Die Scheibenöffnungen 305 sind in Scheibenringabschnitte 306 eingebracht, die aus der Oberscheibe 303 und/oder aus der Unterscheibe 304, insbesondere durch ein umformendes Fertigungsverfahren wie beispielsweise Prägen, Stanzen usw. ausgebildet sind.
Die Scheibenringabschnitte 306 bzw. die Scheibenöffnungen 305 von benachbarten Flachrohren 301 berühren sich zumindest abschnittsweise und sind insbesondere zumindest abschnittsweise miteinander stoffschlüssig, insbesondere durch Schweißen, Löten, Kleben usw., miteinander verbunden.
Die Flachrohre 301 weisen turbulenzerzeugende Elemente auf. Diese nicht näher bezeichneten turbulenzerzeugenden Elemente sind in die Flachrohre 301 beispielsweise als Turbulenzeinlage eingebracht. Die Turbulenzeinlage ist insbesondere ein Blech mit Ausprägungen, die insbesondere in das Blech durch ein umformendes Fertigungsverfahren wie beispielsweise Stanzen oder Prägen eingebracht sind. Die mindestens eine Turbulenzeinlage ist insbesondere zwischen einer Oberscheibe 303 und einer Unterscheibe 304 angeordnet. In einem anderen Ausführungsbeispiel ist ein turbulenzerzeugendes Element in die Oberscheibe 303 und/oder die Unterscheibe 304 des Flachrohres 301 durch ein umformendes Fertigungsverfahren wie beispielsweise Prägen, Stanzen usw. eingebracht. Zwischen benachbarten Flachrohren ist zumindest abschnittsweise zwischen den zwei Scheibenringabschnitten 306 eines Flachrohres 301 ein Hohlraum 308 ausgebildet. In den Hohlraum 308 sind zumindest abschnittsweise turbulenzerzeugende Elemente 307 in Form von Turbulenzeinlagen einbringbar. Die Turbulenzeinlagen sind zumindest abschnittsweise mit zumindest einem Flachrohr 301 verbunden, insbesondere durch Schweißen, Löten, Kleben usw.

**Figur 11** zeigt eine weitere Ausführung eines Flachrohrbündels 400 in Form eines Scheibenstapels 401.

Das Flachrohrbündel 400 weist eine Anzahl von Flachrohren 402 auf. Ein Flachrohr 402 weist jeweils eine Oberscheibe 403 und eine Unterscheibe 404 auf. Die Oberscheibe 403 und die Unterscheibe 404 ist zumindest abschnittsweise stoffschlüssig miteinander, insbesondere durch Schweißen, Löten, Kleben usw., und/oder formschlüssig, insbesondere durch Verkrimpen, Falzen, Bördeln usw., miteinander verbunden.
Aus der Oberscheibe 403 sind zwei Kegelelemente ausgebildet. Die Kegel-elemente 406 weisen jeweils eine Öffnung 407 auf.
Die Unterscheibe 404 weist mindestens eine Öffnung 405 auf.

Benachbarte Flachrohre 402 sind zumindest abschnittsweise stoffschlüssig, insbesondere durch Schweißen, Löten, Kleben usw., und/oder formschlüssig, insbesondere durch Verkrimpen, Falzen, Bördeln usw. miteinander verbunden. Zwischen benachbarten Flachrohren 402 sind turbulenzerzeugende Elemente in Form von Turbulenzeinlagen 408 angebracht. Eine Turbulenzeinlage ist insbesondere ein Blech, in das Prägungen mittels eines umformenden Fertigungsverfahrens eingebracht sind, die zur Verwirbelung eines Strömungsmediums führen.
Zwischen der Oberscheibe 403 und der Unterscheibe 404 sind ebenfalls turbulenzerzeugende Elemente in Form von Turbulenzeinlagen 408 eingebracht. In einer anderen nicht dargestellten Ausführung sind turbulenzerzeugende Elemente in die Oberscheibe 403 und/oder die Unterscheibe 404 durch ein umformendes Fertigungsverfahren wie beispielsweise Prägen, Stanzen usw. eingebracht.

**Figur 12** zeigt ein weiteres Ausführungsbeispiel bzw. eine Weiterbildung eines Bodens 500 mit einem Dehnungselement 501. Gleiche Merkmale sind in Figur 12 mit den gleichen Bezugszeichen versehen wie in den vorherigen Figuren. Für die Beschreibung dieser Merkmale wird auf die entsprechenden Figuren verwiesen. Eine vergrößerte Detaildarstellung in einem Schnitt dargestellt:
Der Boden 500 weist eine erste Platte 506 auf, die eine nicht näher bezeichnete Öffnung in der Mitte der Platte 506 aufweist. Die Platte 506 ist derart ausgebildet, dass sie die nicht dargestellte Öffnung rahmenartig umschließt. Die Platte 506 ist aus Stahl wie beispielsweise aus Edelstahl oder einem anderen Stahl ausgebildet. Sie kann aber auch aus Aluminium oder einem anderen Metall ausgebildet sein. In einer anderen nicht dargestellten Ausführungsform ist die Platte aus Kunststoff oder aus einem Faserverbundwerkstoff oder aus einem keramischen Werkstoff ausgebildet. Die Platte 506 hat eine Dicke von 0,3mm bis 2mm, insbesondere, zwischen 0,5mm bis 1mm, insbesondere zwischen 0,6mm bis 0,9mm, insbesondere 0,8mm.
Die Platte 506 weist eine Dehnungselement 501 auf. Das Dehnungselement 501 weist eine erste sickenförmige Ausprägung 502 und eine zweite sickenförmige Ausprägung 505 auf. Die erste Ausprägung 502 und/oder die zweite sickenförmige Ausprägung 505 sind im Wesentlichen konzentrisch zu der nicht dargestellten Öffnung in der Platte 506 und/oder im Wesentlichen konzentrisch zueinander angeordnet. Die erste Ausprägung 502 ist im Wesentlichen in Richtung einer Achse A1 aus der Platte ausgeprägt. Die zweite Ausprägung 505 ist im Wesentlichen in Richtung einer Achse A2 aus der Platte ausgeprägt. Die Achsen A1 und A2 können parallel zueinander angeordnet sein. In einer anderen Ausgestaltung der Erfindung sind die Achse A1 und A2 in einem Winkel zwischen 0° und 90°, insbesondere zwischen 5° uns 70°, insbesondere, zwischen 8° und 45°, insbesondere zwischen 9° und 30°, insbesondere zwischen 10° und 15° zueinander angeordnet. Die Achse A1 und/oder die Achse A2 sind im Wesentlichen parallel zu einem Normalenvektor der Platte 506, können aber in einer anderen Ausgestaltung auch unter einem Winkel zwischen 0° und 90°, insbesondere zwischen 5° und 70°, insbesondere, zwischen 8° und 45°, insbesondere zwischen 9° und 30°, insbesondere zwischen 10° und 15° zu einem Normalenvektor der Platte 506 angeordnet sein. Im dargestellten Ausführungsbeispiel sind die erste Ausprägung 502 und die zweite Ausprägung 505 derart aus der Platte ausgebildet, dass die zweite Ausprägung 505 ein Tal bezüglich der Platte 506 und die erste Ausprägung 502 eine Art Wall bezüglich der Platte 506 bildet. In einem anderen Ausführungsbeispiel bilden die erste und die zweite Ausprägung beide ein Tal oder beide einen Wall. Die erste Ausprägung 502 und die zweite Ausprägung 505 schließen im Wesentlichen direkt aneinander an.

Die Platte 506 weist einen winkelförmig ausgebildeten Bereich 503 auf, der im Wesentlichen direkt an die erste Ausprägung 502 anschließt.

Eine zweite Platte 507 ist im Wesentlichen wie das Bodenflächenöffnungsgitter 9 ausgebildet und weist die Merkmale des in den vorherigen Figuren beschriebenen Bodenöffnungsgitters 9 auf. Die zweite Platte 507 ist aus einem Material wie Edelstahl oder aus einem anderen Stahl ausgebildet. In einem anderen Ausführungsbeispiel ist die zweite Platte 507 aus Aluminium oder aus einem anderen Metall ausgebildet. In einem weiteren nicht dargestellten Ausführungsbeispiel ist die zweite Platte aus einem Material wie einem Faserverbundwerkstoff, aus einem Kunststoff oder aus einem keramikhaltigen Material ausgebildet. Die zweite Platte 507 weist eine Dicke von 0,5mm bis 5mm, insbesondere eine Dicke zwischen 1 mm und 4mm, insbesondere eine Dicke zwischen 1,5mm und 3mm, insbesondere eine Dicke von 2mm auf.

Die erste Platte 506 und die zweite Platte 507 sind über den winkelförmigen Bereich 503 der ersten Platte 506 mit einem Rand 508 der zweiten Platte 507 stoffschlüssig miteinander verbunden, wie beispielsweise durch zumindest eine Schweißnaht 504 mittels Schweißen, insbesondere Laserschweißen, oder durch Löten mittels einer Lötnaht, oder durch Kleben mittels einer Klebenaht, usw. Die erste Platte 506 und die zweite Platte 507 können auch ausschließlich oder zusätzlich zur stoffschlüssigen Verbindung formschlüssig durch Falzen, Bördeln, Verkrimpen usw. miteinander verbunden sein.

In einer weiteren Ausgestaltung der Erfindung werden vor dem endgültigen stoffschlüssigen und/oder formschlüssigen Verbinden, so wie es im vorherigen Abschnitt beschrieben ist, die erste Platte 506 und die zweite Platte 507 kraftschlüssig verbunden bzw. vorgefügt, so dass die erste Platte 506 über den winkelförmig ausgebildeten Bereich 503 mit der zweiten Platte 507 verspannt ist.

Auf diese Weise werden dann in einem weiteren Bearbeitungsschritt die Rohre 79, 201, insbesondere die Flachrohre, mit der zweiten Platte 507 des Bodens 500 stoffschlüssig bsp durch Schweißen wie Laserschweißen und anschließend oder vorher oder gleichzeitig die zweite Platte 507 mit der ersten Platte 506 verbunden. Auf diese Weise können Arbeitszeiten wie Umspannzeiten eingespart und die Produktionskosten besonders vorteilhaft gesenkt werden.

In einem anderen nicht dargestellten Ausführungsbeispiel sind die die erste Platte 506 und die zweite Platte 507 einteilig ausgebildet.

Die erste Platte 506 wird ausgestanzt oder ausgesägt bzw. ausgepresst oder mittels eines trennenden Fertigungsverfahrens wie Sägen, Schneiden wie beispielsweise Laserstrahlschneiden oder Wasserstrahl schneiden hergestellt. Auf die gleiche Weise kann auch die Kontur der ersten Platte hergestellt werden. In einem weiteren Fertigungsschritt werden die erste Ausprägung 502 und/oder die zumindest zweite Ausprägung 505 und/oder der winkelförmig ausgebildete Bereich mittels eines umformenden Fertigungsverfahrens wie Pressen, Stanzen usw. hergestellt.

Die folgenden Abschnitte können sich auf eine der vorher beschriebenen Figuren 1 bis 12 beziehen:
In einem anderen nicht dargestellten Ausführungsbeispiel werden ein bis drei Rahmenelemente 2, 44, 47, 50, 122, 123 oder mehr als drei Rahmenelemente 2, 44, 47, 50, 122, 123 verwendet.

In einem anderen nicht dargestellten Ausführungsbeispiel weist der Gehäuseflanschabschnitt 36, 56, 66, 78, 114, 115 zumindest eine Nut auf, in die das Dehnungselement als Dichtelement wie beispielsweise als O-Ring usw. ausgebildet ist und in die Nut einbringbar bzw. eingebracht ist.

In einem anderen nicht dargestellten Ausführungsbeispiel ist das Dehnungselement 24, 30, 40, 43, 60, 65, 70, 74, 77, 80, 81 aus Kunststoff, wie beispielsweise aus einem Elastomer oder aus Gummi, oder aus Metall wie beispielsweise aus Edelstahl oder aus Aluminium oder aus einem Faserverbundwerkstoff, der beispielsweise Metall und Kunststoff aufweist, ausgebildet.

In einem Ausführungsbeispiel weist der Boden des Wärmetauschers überall die gleiche Bodendicke d auf. Diese nimmt im Wesentlichen Werte 0,5 mm < d < 7,0 mm, insbesondere Werte zwischen 0,5mm < d < 4mm, insbesondere Werte zwischen 0,5mm und 3,0mm, insbesondere Werte zwischen 0,5mm < d < 2,5mm, insbesondere Werte zwischen 1mm < d < 2,5mm, insbesondere Werte zwischen 1,5mm < d < 2,0mm, insbesondere Werte zwischen 1,6mm < d < 1,9mm, insbesondere Werte zwischen 1,65mm < d < 1,85mm.

In einem anderen Ausführungsbeispiel weist der Boden des Wärmetauschers unterschiedliche Bodendicke d in den unterschiedlichen Bereichen auf.
Insbesondere ist die Bodendicke d in den Randbereichen, insbesondere in den Rahmenabschnitten oder den äußeren Rahmenabschnitten dünner ausgebildet als im inneren Abschnitt des Bodens, insbesondere im Zentrumsabschnitt des Bodens, in dem die Rohre aufgenommen werden.

Die Bodendicke d nimmt im Wesentlichen Werte 0,5 mm < d < 7,0 mm, insbesondere Werte zwischen 0,5mm < d < 4mm, insbesondere Werte zwischen 0,5mm und 3,0mm, insbesondere Werte zwischen 0,5mm < d < 2,5mm, insbesondere Werte zwischen 1mm < d < 2,5mm, insbesondere Werte zwischen 1,5mm < d < 2,0mm, insbesondere Werte zwischen 1,6mm < d < 1,9mm, insbesondere Werte zwischen 1,65mm < d < 1,85mm.

Die Merkmale der verschiedenen Ausführungsbeispiele sind beliebig miteinander kombinierbar. Die Erfindung ist auch für andere als die gezeigten Gebiete einsetzbar.

## Patentansprüche

1. Wärmetauscher zur Abgaskühlung aufweisend
mindestens ein Gehäuse (101),
mindestens einen ersten Strömungskanal für ein erstes Medium, mindestens einen zweiten Strömungskanal für ein zweites Medium, mindestens einen Boden (1, 20, 121), der mit dem Gehäuse (101) verbindbar ist, wobei der Boden zum Ausgleich von Längsdehnungen mindestens ein Dehnungselement aufweist, **dadurch gekennzeichnet, dass** das Dehnungselement ein in Richtung einer thermischen Querdehnung zumindest eines Strömungskanals dehnbares Dehnungselement (24,30,40,60,65,70,77,80,81) ist.

2. Wärmetauscher nach Anspruch 1, **dadurch gekennzeichnet, dass** das Dehnungselement (24, 30, 40, 60, 65, 70, 77, 80, 81) aus Metall ausgebildet ist.

3. Wärmetauscher nach Anspruch 1 oder 2, **dadurch gekennzeichnet, dass** das Dehnungselement (24, 30, 40, 60, 65, 70, 77, 80, 81) zumindest eine Ausprägung ist, die insbesondere umlaufend in den Boden (1, 20, 121) einbringbar ist.

4. Wärmetauscher nach einem der vorhergehenden Ansprüche, **dadurch gekennzeichnet, dass** das Dehnungselement (24, 30, 40, 60, 70, 77, 80, 81) mäanderförmig ausgebildet ist.

5. Wärmetauscher nach einem der vorhergehenden Ansprüche, **dadurch gekennzeichnet, dass** das Dehnungselement (24, 40, 60, 65) ein Faltenbalg (43, 61) ist.

6. Wärmetauscher nach einem der vorhergehenden Ansprüche, **dadurch gekennzeichnet, dass** das Gehäuse (101) ein Gussgehäuse ist.

7. Wärmetauscher nach einem der vorhergehenden Ansprüche, **dadurch gekennzeichnet, dass** mindestens ein Anschlussstutzen (107, 108) und/oder mindestens ein Befestigungskörper (102) einteilig mit dem Gehäuse (101) ausgebildet sind.

8. Wärmetauscher nach einem der vorhergehenden Ansprüche, **dadurch gekennzeichnet, dass** der Boden (1, 20, 121) mit dem Gehäuse (101) stoffschlüssig, insbesondere durch Schweißen, Kleben usw., und/oder formschlüssig, insbesondere durch Schrauben, Bördeln, Falzen, Verkrimpen usw. verbindbar ist.

9. Wärmetauscher nach einem der vorhergehenden Ansprüche, **dadurch gekennzeichnet, dass** der Wärmetauscher (100) einflutig oder mehrflutig durchströmbar ist.

10. Wärmetauscher nach einem der vorhergehenden Ansprüche, **dadurch gekennzeichnet, dass** mindestens ein Dehnungselement (80, 81) zumindest abschnittsweise beabstandend zwischen dem Boden (82) und dem Gehäuse (41) und zumindest abschnittsweise beabstandend zwischen dem Boden (1,20,82) und dem Diffusor (90,112,113) angeordnet ist.

11. Wärmetauscher nach einem der vorhergehenden Ansprüche, **dadurch gekennzeichnet, dass** das zumindest eine Dehnungselement (24, 30, 40, 60, 70, 80, 81) ein Dichtelement ist.

12. Wärmetauscher nach Anspruch 1, **dadurch gekennzeichnet, dass** die Rohre (201, 301, 402) das Gehäuse (101) zumindest abschnittsweise berühren.

13. Wärmetauscher nach Anspruch 1, **dadurch gekennzeichnet, dass** Rohre Ausprägungen (205) aufweisen, die das Gehäuse (101) zumindest abschnittsweise berühren.

14. Verfahren zur Herstellung eines Wärmetauschers, nach einem der vorhergehenden Ansprüche, **dadurch gekennzeichnet, dass** das Gehäuse (101) mit einem urformenden Fertigungsverfahren hergestellt wird.

15. Verfahren zur Herstellung eines Wärmetauschers nach Anspruch 13, **dadurch gekennzeichnet, dass** das Gehäuse (101) durch Gießen, insbesondere Gießen mit einer verlorenen Form, hergestellt wird.

## Claims

1. A heat exchanger for exhaust gas cooling, having
at least one housing (101),
at least one first flow duct for a first medium,
at least one second flow duct for a second medium,
at least one bottom (1, 20, 121) which is connectable to the housing (101), wherein the bottom has at least one expansion element for the compensation of longitudinal extensions, **characterised in that** the expansion element is an expansion element (24, 30, 40, 60, 65, 70, 77, 80, 81) which is expandable in the direction of a thermal lateral expansion of at least one flow duct.

2. The heat exchanger according to claim 1, **characterised in that** the expansion element (24, 30, 40, 60, 65, 70, 77, 80, 81) is produced from metal.

3. The heat exchanger according to claim 1 or 2, **characterised in that** the expansion element (24, 30, 40, 60, 65, 70, 77, 80, 81) is at least one embossing which, in particular, can be introduced peripherally into the bottom (1, 20, 121).

4. The heat exchanger according to one of the preceding claims, **characterised in that** the expansion element (24, 30, 40, 60, 70, 77, 80, 81) is of meander-shaped design.

5. The heat exchanger according to one of the preceding claims, **characterised in that** the expansion element (24, 40, 60, 65) is a concertina (43, 61).

6. The heat exchanger according to one of the preceding claims, **characterised in that** the housing (101) is a cast housing.

7. The heat exchanger according to one of the preceding claims, **characterised in that** at least one connection piece (107, 108) and/or at least one fastening body (102) are produced in one piece with the housing (101) .

8. The heat exchanger according to one of the preceding claims, **characterised in that** the bottom (1, 20, 121) is connectable to the housing (101) in a materially integral manner, in particular by welding, adhesive bonding, etc., and/or with a form fit, in particular by screwing, flanging, folding, crimping, etc.

9. The heat exchanger according to one of the preceding claims, **characterised in that** the heat exchanger (100) can have a single-flood or multi-flood throughflow.

10. The heat exchanger according to one of the preceding claims, **characterised in that** at least one expansion element (80, 81) is arranged, spaced apart at least in portions, between the bottom (82) and the housing (41) and, spaced apart at least in portions, between the bottom (1, 20, 82) and the diffuser (90, 112, 113) .

11. The heat exchanger according to one of the preceding claims, **characterised in that** the at least one expansion element (24, 30, 40, 60, 70, 80, 81) is a sealing element.

12. The heat exchanger according to claim 1, **characterised in that** the tubes (201, 301, 402) touch the housing (101) at least in portions.

13. The heat exchanger according to claim 1, **characterised in that** the tubes have embossings (205) which touch the housing (101) at least in portions.

14. A method for producing a heat exchanger according to one of the preceding claims, **characterised in that** the housing (101) is produced by means of a forming manufacturing method.

15. A method for producing a heat exchanger according to claim 13, **characterised in that** the housing (101) is produced by casting, in particular expendable mould casting.

## Revendications

1. Echangeur de chaleur servant au refroidissement de gaz d'échappement, présentant
au moins un carter (101),
au moins un premier conduit d'écoulement pour un premier milieu,
au moins un deuxième conduit d'écoulement pour un deuxième milieu,
au moins un fond (1, 20, 121) qui peut être assemblé avec le carter (101), où le fond présente, pour la compensation d'allongements longitudinaux, au moins un élément de dilatation, **caractérisé en ce que** l'élément de dilatation est un élément de dilatation (24, 30, 40, 60, 65, 70, 77, 80, 81) extensible dans la direction d'une dilatation transversale thermique au moins d'un conduit d'écoulement.

2. Echangeur de chaleur selon la revendication 1, **caractérisé en ce que** l'élément de dilatation (24, 30, 40, 60, 65, 70, 77, 80, 81) est en métal.

3. Echangeur de chaleur selon la revendication 1 ou 2, **caractérisé en ce que** l'élément de dilatation (24, 30, 40, 60, 65, 70, 77, 80, 81) est au moins une partie saillante qui peut être introduite en particulier dans le fond (1, 20, 121), de manière circulaire.

4. Echangeur de chaleur selon l'une quelconque des revendications précédentes, **caractérisé en ce que** l'élément de dilatation (24, 30, 40, 60, 70, 77, 80, 81) est configuré en forme de méandres.

5. Echangeur de chaleur selon l'une quelconque des revendications précédentes, **caractérisé en ce que** l'élément de dilatation (24, 40, 60, 65) est un soufflet (43, 61) .

6. Echangeur de chaleur selon l'une quelconque des revendications précédentes, **caractérisé en ce que** le carter (101) est un carter moulé.

7. Echangeur de chaleur selon l'une quelconque des revendications précédentes, **caractérisé en ce qu'**au moins une tubulure de raccordement (107, 108) et / ou au moins un corps de fixation (102) sont conçus en formant une seule et même pièce avec le carter (101).

8. Echangeur de chaleur selon l'une quelconque des revendications précédentes, **caractérisé en ce que** le fond (1, 20, 121) peut être assemblé avec le carter (101) par continuité de matière, en particulier par soudage, par collage, etc. et / ou par complémentarité de forme, en particulier par vissage, par bordage, par agrafage, par sertissage, etc.

9. Echangeur de chaleur selon l'une quelconque des revendications précédentes, **caractérisé en ce que** l'échangeur de chaleur (100) peut être traversé par un ou plusieurs flux.

10. Echangeur de chaleur selon l'une quelconque des revendications précédentes, **caractérisé en ce qu'**au moins un élément de dilatation (80, 81) est disposé en créant au moins partiellement un espacement entre le fond (82) et le carter (41) et en créant au moins partiellement un espacement entre le fond (1, 20, 82) et le diffuseur (90, 112, 113).

11. Echangeur de chaleur selon l'une quelconque des revendications précédentes, **caractérisé en ce que** l'élément de dilatation (24, 30, 40, 60, 70, 80, 81) au moins au nombre de un est un élément d'étanchéité.

12. Echangeur de chaleur selon la revendication 1, **caractérisé en ce que** les tubes (201, 301, 402) sont au moins partiellement au contact du carter (101).

13. Echangeur de chaleur selon la revendication 1, **caractérisé en ce que** des tubes présentent des parties saillantes (205) qui sont au moins partiellement au contact du carter (101).

14. Procédé de fabrication d'un échangeur de chaleur selon l'une quelconque des revendications précédentes, **caractérisé en ce que** le carter (101) est produit en utilisant un procédé de fabrication de première transformation.

15. Procédé de fabrication d'un échangeur de chaleur selon la revendication 13, **caractérisé en ce que** le carter (101) est fabriqué par moulage, en particulier par moulage avec un moule perdu.
